(19) **Europäisches Patentamt**
**European Patent Office**
**Office européen des brevets**

(11) **EP 4 152 787 A1**

(12) **EUROPEAN PATENT APPLICATION**
published in accordance with Art. 153(4) EPC

(43) Date of publication:
**22.03.2023 Bulletin 2023/12**

(21) Application number: **20935423.2**

(22) Date of filing: **14.05.2020**

(51) International Patent Classification (IPC):
***H04W 8/22*** (2009.01)

(52) Cooperative Patent Classification (CPC):
**H04W 8/22**

(86) International application number:
**PCT/JP2020/019304**

(87) International publication number:
**WO 2021/229758 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **OKAMURA, Masaya**
**Tokyo 100-6150 (JP)**
• **MATSUMURA, Yuki**
**Tokyo 100-6150 (JP)**
• **RUPASINGHE, Nadisanka**
**Palo Alto, California 94304 (US)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57) A terminal according to one aspect of the present disclosure includes: a control section that generates transmitted precoding matrix indicator (TPMI) group capability information based on a second TPMI group set (for a terminal that supports a full-coherent codebook subset) that is defined differently from a first TPMI group set for a terminal that supports a partial coherent codebook subset; and a transmitting section that transmits the TPMI group capability information corresponding to a TPMI group that supports full power transmission. According to one aspect of the present disclosure, it is possible to control full power transmission appropriately.

| TPMI Groups for full-coherent UE | Precoder enabling full Tx power | PA architecture |
|---|---|---|
| G0 | (i.e. all full-coherent TPMIs) | [23 17 17 17] |
| G1 | (i.e. all full-coherent TPMIs) | [23 17 23 17] |
| G2 | (i.e. all full-coherent TPMIs) | [23 23 23 17] |
| G3 | (i.e. all full-coherent TPMIs) | [20 20 20 17] |
| G4 | (i.e. all full-coherent TPMIs) | [20 17 20 17] |
| G5 | (i.e. all full-coherent TPMIs) | [20 20 20 20] |
| G6 | (i.e. all full-coherent TPMIs) | [23 17 20 17] |
| G7 | (i.e. all full-coherent TPMIs) | [23 20 23 20] |
| G8 | (i.e. all full-coherent TPMIs) | [23 23 17 17] |
| G9 | (i.e. all full-coherent TPMIs) | [20 20 17 17] |
| G10 | (Only non-antenna selection (i.e. full-coherent) TPMIs achieve UL full power: e.g. $\frac{1}{2}\begin{bmatrix}1\\1\\1\\1\end{bmatrix}$) | [17 17 17 17] |

FIG. 4

EP 4 152 787 A1

## Description

Technical Field

The present disclosure relates to a terminal, a radio communication method and a base station in a next-generation mobile communication system.

Background Art

In a universal mobile telecommunications system (UMTS) network, specifications of long term evolution (LTE) have been drafted for the purpose of further increasing data rates, providing low latency, and the like (Non Patent Literature 1). Further, the specifications of LTE-Advanced (third generation partnership project (3GPP) Rel. 10 to 14) have been drafted for the purpose of further increasing capacity and advancement of LTE (3GPP Rel. 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

In NR, the capability of a user terminal (user equipment (UE)) related to codebook-based UL full power transmission using a plurality of power amplifiers (PAs) has been studied. Discussions for NR so far has proposed UE capabilities 1 to 3, as follows:

- UE capability 1: PAs that can output the maximum rated power (full rated PAs) are supported (included) on each transmission chain (Tx chain)
- UE capability 2: no Tx chain supports full rated PAs
- UE capability 3: a subset (a part) of Tx chains supports full rated PAs

Further, configuring a UE supporting UE capability 2 or 3 to operate in at least one of two modes (modes 1 and 2) for full power transmission has been considered. In NR Rel. 16, a UE reporting UE capability information indicating support for operating in mode 1, reporting UE capability information indicating support for operating in mode 2, or reporting UE capability information regarding a transmitted precoding matrix indicator (TPMI) set (which may also be referred to as a TPMI group) capable of full power transmission in relation to mode 2 has been considered.

However, what kind of TPMI group the UE should report has not yet been studied. In a case where an appropriate TPMI group is not reported, the UE cannot properly perform full power transmission. The inability to perform full power transmission may cause, for example, a decrease in coverage, which leads to difficulty in an increase in communication throughput.

Therefore, an object of the present disclosure is to provide a terminal, a radio communication method, and a base station capable of appropriately controlling full power transmission.

Solution to Problem

A terminal according to one aspect of the present disclosure includes: a control section that generates transmitted precoding matrix indicator (TPMI) group capability information based on a second TPMI group set (for a terminal that supports a full-coherent codebook subset) that is defined differently from a first TPMI group set for a terminal that supports a partial coherent codebook subset; and a transmitting section that transmits the TPMI group capability information corresponding to a TPMI group that supports full power transmission.

Advantageous Effects of Invention

According to one aspect of the present disclosure, it is possible to control full power transmission appropriately.

Brief Description of Drawings

Fig. 1 is a diagram illustrating an example of association between a precoder type and a transmitted precoding matrix indicator (TPMI) index.
Fig. 2 is a diagram illustrating an example of a configuration of UEs assuming full power transmission-related UE capabilities 1 to 3.
Figs. 3A and 3B are diagrams illustrating examples of TPMI groups.
Fig. 4 is a diagram illustrating an example of a precoder enabling full power transmission and power amplifier (PA) architecture corresponding to each group reported in a first embodiment.
Fig. 5 is a diagram illustrating an example of a precoder enabling full power transmission and PA architecture corresponding to each group reported in the first embodiment.
Figs. 6A and 6B are diagrams illustrating an example of TPMI groups that do not correspond to the PA architectures [20 17 17 17] and [17 17 17 17] and consider antenna port switching between arbitrary ports.

Fig. 7 is a diagram illustrating an example of a correspondence between the PA architecture and the group of Fig. 6A.

Figs. 8A and 8B are diagrams illustrating an example of TPMI groups that correspond to the PA architectures [20 17 17 17] and [17 17 17 17] and consider antenna port switching between arbitrary ports.

Fig. 9 is a diagram illustrating an example of a correspondence between the PA architecture and the group of Fig. 8A.

Figs. 10A and 10B are diagrams illustrating an example of TPMI groups that do not correspond to the PA architecture [23 17 17 17] and consider antenna port switching between arbitrary ports.

Fig. 11 is a diagram illustrating an example of a correspondence between the PA architecture and the group of Fig. 10A.

Fig. 12 is a diagram illustrating an example of a TPMI group and a corresponding precoder enabling full power transmission according to a second embodiment.

Fig. 13 is a diagram illustrating an example of TPMI group capability information indicating the TPMI group of Fig. 12.

Fig. 14 is a diagram illustrating an example of a TPMI group and a corresponding precoder enabling full power transmission according to the second embodiment.

Fig. 15 is a diagram illustrating an example of TPMI group capability information indicating the TPMI group of Fig. 14.

Fig. 16 is a diagram illustrating an example of a correspondence between the PA architecture and the group of Fig. 14.

Fig. 17 is a diagram illustrating an example of a TPMI group and a corresponding precoder enabling full power transmission according to the second embodiment.

Fig. 18 is a diagram illustrating an example of TPMI group capability information indicating the TPMI group of Fig. 17.

Fig. 19 is a diagram illustrating an example of a correspondence between the PA architecture and the group of Fig. 17.

Fig. 20 is a diagram illustrating an example of a TPMI group and a corresponding precoder enabling full power transmission according to a modification of the second embodiment.

Fig. 21 is a diagram illustrating an example of TPMI group capability information indicating the TPMI group of Fig. 20.

Fig. 22 is a diagram illustrating an example of a schematic configuration of a radio communication system according to one embodiment.

Fig. 23 is a diagram illustrating an example of a configuration of a base station according to one embodiment.

Fig. 24 is a diagram illustrating an example of a configuration of a user terminal according to one embodiment.

Fig. 25 is a diagram illustrating an example of a hardware configuration of the base station and the user terminal according to one embodiment.

Description of Embodiments

(Physical Uplink Shared Channel (PUSCH) Precoder)

In New Radio (NR), it is considered that a user equipment (UE) will support at least one of codebook (CB)-based transmission or non-codebook (NCB)-based transmission.

For example, it is considered that the UE uses at least a measurement reference signal (sounding reference signal (SRS)) resource index (SRI) to determine a precoder (precoding matrix) for at least one of CB-based physical uplink shared channel (PUSCH) transmission or NCB-based uplink shared channel (PUSCH) transmission.

In a case of the CB-based transmission, the UE may determine the precoder for PUSCH transmission based on the SRI, a transmitted rank indicator (TRI), a transmitted precoding matrix indicator (TPMI), and the like. In a case of the NCB-based transmission, the UE may determine the precoder for PUSCH transmission based on the SRI.

The SRI, the TRI, the TPMI, and the like may be notified to the UE using downlink control information (DCI). The SRI may be specified by an SRS resource indicator field (SRI field) of the DCI, or may be specified by a parameter "srs-ResourceIndicator" included in a radio resource control (RRC) information element "ConfiguredGrantConfig" of a configured grant PUSCH. The TRI and the TPMI may be specified by a field of precoding information of the DCI and the number of layers ("precoding information and number of layers" field).

The UE may report UE capability information regarding a precoder type, and the precoder type based on the UE capability information may be configured by higher layer signaling from a base station. The UE capability information may be precoder type information (which may also be represented by an RRC parameter "pusch-TransCoherence") used by the UE in PUSCH transmission.

In the present disclosure, higher layer signaling may be, for example, any of RRC signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), or the like.

The UE may determine the precoder used for PUSCH transmission based on the precoder type information (which may also be represented by an RRC parameter "codebookSubset") included in PUSCH configuration information ("PUSCH-Config" information element of RRC signaling) notified by higher layer signaling. The UE may be configured with a subset of PMIs specified by the TPMI, by codebookSubset.

The precoder type may be designated by any of full coherent (fully coherent or coherent), partial coherent, non coherent, or a combination of at least two of them (which may also be represented by parameters such as "fullyAndPartialAndNonCoherent" and "partialAndNonCoherent", for example).

Full coherent may mean that all the antenna ports used for transmission are synchronized (which may be expressed as phase-matched, the same precoder applied, or the like). Partial coherent may mean that some ports of the antenna ports used for transmission are synchronized, but that some ports and other ports cannot be synchronized. Non coherent may mean that each antenna port used for transmission cannot be synchronized.

A UE that supports a full coherent precoder type may be assumed to support partial coherent and non coherent precoder types. A UE that supports the partial coherent precoder type may be assumed to support the non coherent precoder type.

In the present disclosure, the precoder type may be read as coherency, PUSCH transmission coherence, coherent type, coherence type, codebook type, codebook subset, codebook subset type, or the like.

The UE may determine a precoding matrix corresponding to a TPMI index obtained from the DCI (e.g., DCI format 0_1, the same applies hereinafter) that schedules UL transmission from multiple precoders (which may also be referred to as precoding matrices, codebooks, or the like) for the CB-based transmission.

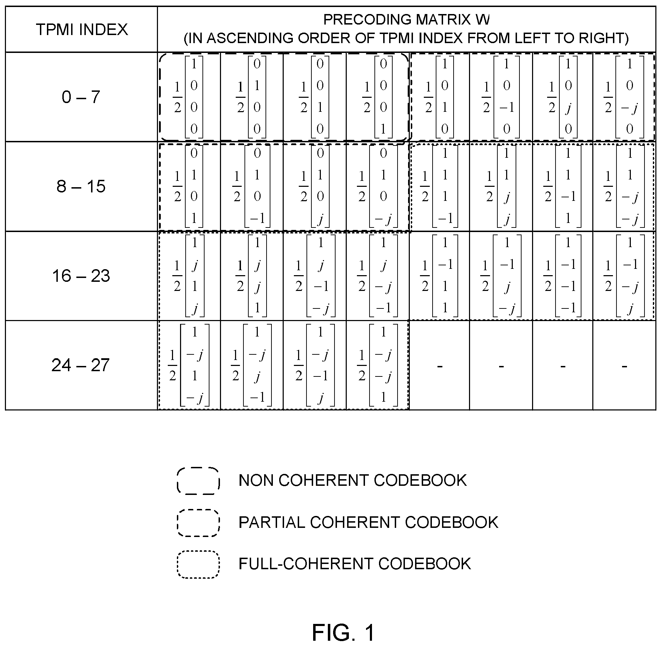

Fig. 1 is a diagram illustrating an example of association between the precoder type and a TPMI index. Fig. 1 is a table showing a precoding matrix W for single layer transmission using four antenna ports in discrete Fourier transform spread orthogonal frequency division multiplexing (OFDM) (DFT-s-OFDM) (with transform precoding enabled).

In Fig. 1, if the precoder type (codebookSubset) is fullyAndPartialAndNonCoherent, the UE is notified with a TPMI of 0 to 27 for single layer transmission. In addition, if the precoder type is partialAndNonCoherent, the UE is configured with a TPMI of 0 to 11 for single layer transmission. If the precoder type is nonCoherent, the UE is configured with a TPMI of 0 to 3 for single layer transmission.

Fig. 1 is a table defined in NR Rel. 15. In this table, if a full coherent transmit power corresponding to indexes #12 to #27 is set to 1 (= $(1/2)^2 * 4$), a partial coherent transmit power corresponding to indexes #4 to #11 is set to 1/2 (= $(1/2)^2 * 2$), and a non coherent transmit power corresponding to indexes #0 to #3 is set to 1/4 (= $(1/2)^2 * 1$).

In other words, according to NR Rel. 15 specifications, the use of a part of codebooks in the UE performing the codebook-based transmission using a plurality of ports has a smaller transmit power than that of the transmission using a single port in some cases (full power transmission is unable).

Moreover, as illustrated in Fig. 1, the precoding matrix in which only one of the components in respective columns is non-zero can be referred to as a non coherent codebook. The precoding matrix in which a given number (but not all) of components in respective columns are non-zeros can be referred to as a partial coherent codebook. The precoding matrix in which all components in respective columns are non-zeros can be referred to as a full-coherent codebook.

The non coherent codebook and the partial coherent codebook may also be referred to as antenna selection precoders. The full-coherent codebook may also be referred to as a non-antenna selection precoder.

Moreover, in the present disclosure, the partial coherent codebook can be a codebook (i.e., codebooks of TPMIs = 4 to 11 for single layer transmission using four antenna ports) obtained by excluding codebooks corresponding to TPMIs specifying a UE configured with a non coherent codebook subset (e.g., RRC parameter "codebookSubset" = "nonCoherent") among codebooks (precoding matrices) corresponding to TPMIs specifying a UE configured with a partial coherent codebook subset (e.g., RRC parameter "codebookSubset" = "partialAndNonCoherent") by the DCI for the codebook-based transmission.

Moreover, in the present disclosure, the full-coherent codebook can be a codebook (i.e., codebooks of TPMIs = 12 to 27 for single layer transmission using four antenna ports) obtained by excluding codebooks corresponding to TPMIs specifying a UE configured with a partial coherent codebook subset (e.g., RRC parameter "codebookSubset" = "partialAndNonCoherent") among codebooks (precoding matrix) corresponding to TPMIs specifying a UE configured with a full-coherent codebook subset (e.g., RRC parameter "codebookSubset" = "fullyAndPartialAndNonCoherent") by DCI for codebook-based transmission.

(UE Capability for Full Power Transmission)

Even when the codebook is used, it is preferable to perform UL full power transmission appropriately. Therefore, in NR, the UE capability related to codebook-based UL full power transmission using a plurality of power amplifiers (PAs) has been studied. Discussions for NR so far has proposed UE capabilities 1 to 3, as follows:

- UE capability 1: PAs that can output the maximum rated power (full rated PAs) are supported (included) on each transmission chain (Tx chain)

- UE capability 2: no Tx chain supports full rated PAs
- UE capability 3: a subset (a part) of Tx chains supports full rated PAs

Moreover, a UE having at least one of the UE capabilities 1 to 3 can mean that the UE supports UL full power transmission. The UE can report capability information indicating that, in addition to or apart from the UE capabilities 1 to 3, UL full power transmission capability is supported, to a network (e.g., the base station). The configuring of a UE supporting full power transmission can be made from the network.

The UE capability 1, 2, or 3 can be replaced with a full power transmission-related UE capability 1, 2, or 3, a full power transmission type 1, 2, or 3, an electric power allocation type 1, 2, or 3, and the like. In the present disclosure, the terms of type, mode, capability, and the like can be used interchangeably. In addition, in the present disclosure, such numerals of 1, 2, and 3 can be replaced with an optional set of numerals or characters, such as A, B, and C.

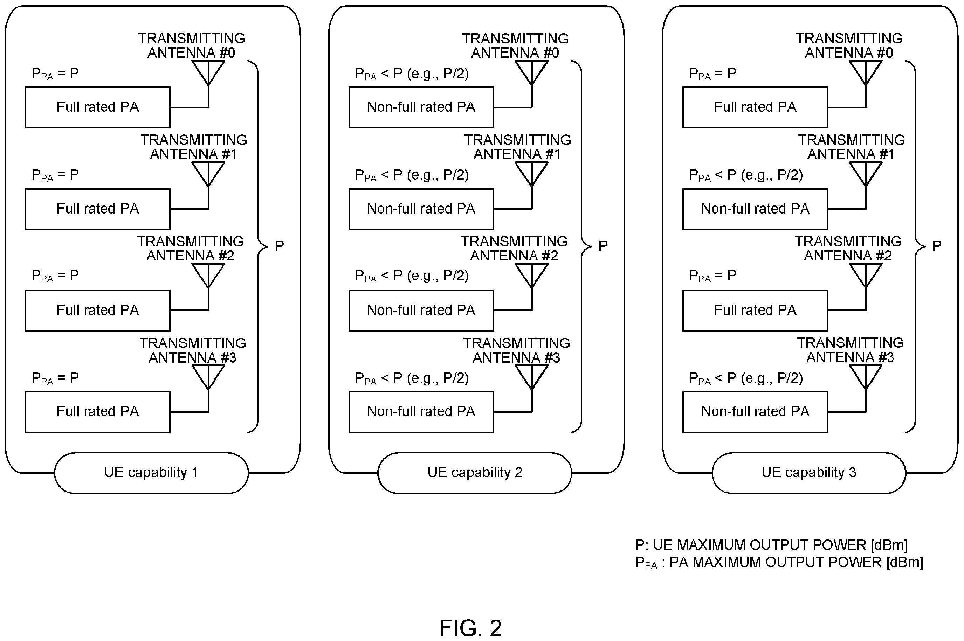

Fig. 2 is a diagram illustrating an example of a configuration of UEs assuming the full power transmission-related UE capabilities 1 to 3. Fig. 2 illustrates in a simplified form only a PA and a transmitting antenna port (which can also be referred to as a transmitting antenna) of the configuration of the UE. Moreover, this exemplary illustration shows that the number of PAs and the number of transmitting antenna ports are four, but not limited to this number.

Moreover, P indicates UE maximum output power [dBm], and $P_{PA}$ indicates PA maximum output power [dBm]. Furthermore, P can be, for example, 23 dBm for a UE with power class 3 and 26 dBm for a UE with power class 2. Although $P_{PA} \leq P$ is herein assumed, an embodiment of the present disclosure is applicable to a case where $P_{PA} > P$.

The configuration of UE capability 1 is expected to be costly to implement, but its full power transmission is possible using one or more optional antenna ports. The configuration of UE capability 2 includes only a non-full rated PA and is expected to be implementable at a lower cost, but fails to perform the full power transmission using only one antenna port, so the phase, amplitude, or the like of the signal input to each PA is necessary to be controlled. Note that UE capability 1 may also be referred to as mode 0.

The configuration of UE capability 3 has a mixed form between the configuration of UE capability 1 and the configuration of UE capability 2. Antenna ports capable of full power transmission (transmitting antennas #0 and #2 in this example) and antenna ports not capable of full power transmission (transmitting antennas #1 and #3 in this example) are mixed.

Moreover, the index, number, or the like of antenna ports capable of full power transmission of UE capability 3 is not limited to this illustrated example. In addition, in this example, it is assumed that $P_{PA} = P / 2$ of the non-full rated PA, but the value of $P_{PA}$ is not limited to this exemplary value.

Meanwhile, configuring a UE supporting UE capability 2 or 3 to operate in at least one of two modes (modes 1 and 2) for full power transmission has been considered. Modes 1 and 2 may be referred to as operation modes 1 and 2, respectively.

Here, mode 1 can be a mode in which a UE is configured in such a way that one or more SRS resources included in one SRS resource set whose usage is "codebook" have the same number of SRS ports (which may also be referred to as a first full power transmission mode, for example). The UE operating in mode 1 can perform full power transmission using all the antenna ports.

The configuring of the UE operating in mode 1 can be made by the network in such a way as to use a subset of TPMIs used to combine ports within one layer to achieve full power transmission. A new codebook subset can be introduced only for a rank value, which includes a TPMI precoder corresponding to "fullyAndPartialAndNonCoherent" defined in NR Rel. 15 but is not available for full power transmission.

On the other hand, mode 2 can herein be a mode in which a UE is configured in such a way that one or more SRS resources included in one SRS resource set whose usage is "codebook" have the different number of SRS ports (which may also be referred to as a second full power transmission mode, for example). The UE operating in mode 2 can perform full power transmission using not all the antenna ports but some of the antenna ports.

The UE operating in mode 2 can transmit the PUSCH and SRS in the same way regardless of the availability of antenna virtualization. The UE in mode 2 can be notified of a set of TPMIs for achieving full power transmission because of supporting more SRS resources than one port. In a case of mode 2, two or three SRS resources can be configured for each SRS resource set (up to two for NR Rel. 15).

Mode 1 has the advantage that the required SRI field size can be smaller than that of mode 2 (full power transmission is possible with one SRS resource).

Mode 2 has the advantage that single port transmission and multiport transmission are dynamically switchable by DCI unlike mode 1. In addition, full power transmission is achievable with some antenna ports, and so, for example, it is possible to perform full power transmission using only an antenna provided with a full rated PA or using only a coherent antenna.

Moreover, the UE can determine a mode to be used for PUSCH transmission based on higher layer signaling (e.g., RRC signaling), physical layer signaling (e.g., DCI), or a combination thereof. In other words, the UE may set or indicate the mode to be used for PUSCH transmission by UL full power transmission mode information (ULFPTxModes) in a higher layer parameter (e.g., PUSCH configuration information (PUSCH-Config information element)).

In NR Rel. 16, a UE reporting UE capability information indicating support for operating in mode 1, reporting UE capability information indicating support for operating in mode 2, or reporting UE capability information regarding a TPMI set (which may also be referred to as a TPMI group) enabling full power transmission in relation to mode 2 (which may also be referred to as TPMI group capability information) has been considered.

Further, for mode 2, use of a codebook and a codebook subset of NR Rel. 15 is studied.

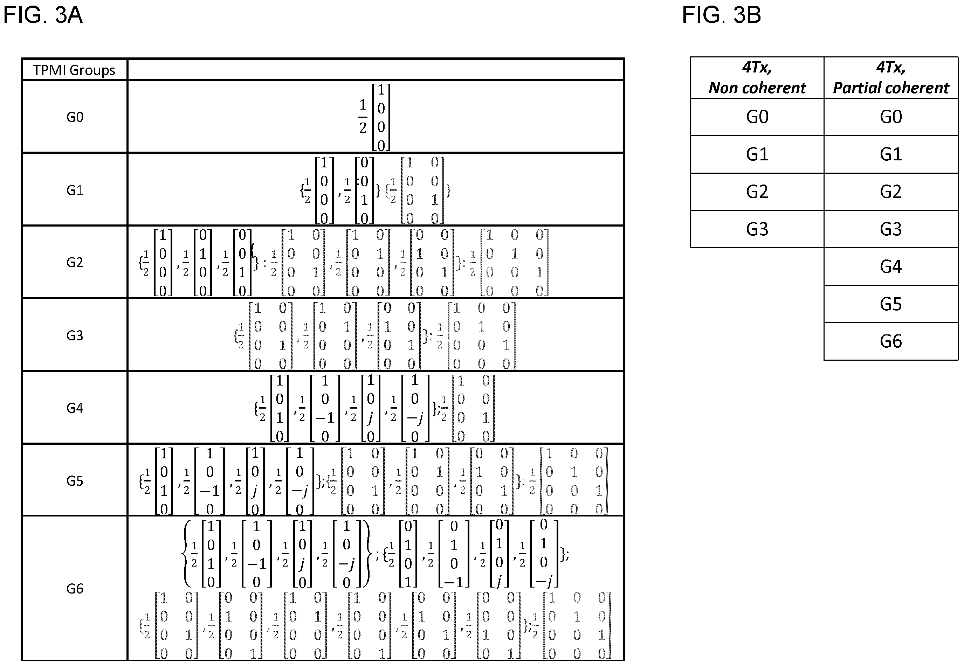

Figs. 3A and 3B are diagrams illustrating examples of TPMI groups. Fig. 3A illustrates precoding matrices (precoders) of each rank corresponding to TPMI groups in a case where the number of transmitting antenna ports is four. In this example, precoders enabling full power transmission for a rank are one or more precoders within a range partitioned by at least one of a colon ":" or a semicolon ";". Note that in a case where precoders enabling full power transmission for a rank include a plurality of precoders surrounded by "{}", full power transmission can be performed for the rank by using any of the plurality of precoders. The number of columns in each matrix may represent the number of layers.

Fig. 3B illustrates examples of TPMI groups assumed in a UE with four transmitting antenna ports. In this example, a non coherent UE with four transmitting antenna ports can be adapted for any of G0 to G3. A partial coherent UE with four transmitting antenna ports can be adapted for any of G0 to G6.

In a case where the codebook subset included in the PUSCH configuration information is non coherent or partial coherent (RRC parameter "codebookSubset" = "nonCoherent" or "partialAndNonCoherent"), and the PUSCH configuration information includes a parameter ("ULFPTx") indicating full power transmission, the UE may scale (e.g., multiplication or division) a linear value of a PUSCH transmit power determined based on a path-loss or the like by a certain factor s. The factor may also be referred to as a power scaling factor.

For example, in a case where UL full power transmission mode information (ULFPTxModes) = mode 1, and each SRS resource in an SRS resource set whose usage is the codebook has more than one SRS port, the UE may derive s = (the number of non-zero PUSCH antenna ports/the maximum number of SRS ports supported by the UE in one SRS resource).

Here, the non-zero PUSCH antenna port can mean an antenna port having a non-zero PUSCH transmit power or an antenna port whose value is not zero (e.g., 1 or j) among the antenna ports whose transmission is represented by the precoding matrix (codebook subset).

A UE in which UL full power transmission mode information (ULFPTxModes) = mode 2 (also referred to as a mode 2 UE) may apply s = 1 for the TPMI precoder reported as the TPMI group described above.

The mode 2 UE may derive s = (the number of non-zero PUSCH antenna ports/the number of SRS ports) for a TPMI precoder other than that reported as the TPMI group described above. Here, the number of SRS ports may be the number of SRS ports related to the SRS resource in a case where only one SRS resource is configured in the SRS resource set whose usage is the codebook, and the number of SRS ports may correspond to the number of SRS ports of the SRS resource indicated by the SRI in a case where more than one SRS resource is configured in the SRS resource set whose usage is the codebook.

The UE can divide the linear value of the PUSCH transmit power scaled using the factor s evenly across the non-zero PUSCH antenna ports. The UE can apply the determined (or assumed) factor s to the precoding matrix to transmit a PUSCH at full power. In other words, the UE can transmit a PUSCH at full power by using a matrix obtained by multiplying the matrix portion of the precoding matrix by the factor s (or √s).

As described above, mode 2 requires the UE to report the TPMI group that supports UL full power transmission. However, what kind of TPMI group the UE should report (e.g., is only G0 to G6 described above sufficient?) has not yet been studied. As described above, currently contemplated TPMI groups are for non coherent UEs/partial coherent UEs, and in a case of reporting TPMI group capability information for full-coherent UEs, what kind of TPMI group should be reported has not been considered.

In a case where an appropriate TPMI group is not reported, the UE cannot properly perform full power transmission. The inability to perform full power transmission may cause, for example, a decrease in coverage, which leads to difficulty in an increase in communication throughput.

Therefore, the present inventors have analyzed the PA architecture corresponding to the UE capability and have conceived a group set suitable for reporting. Further, according to one aspect of the present disclosure, for example, the UE can perform uplink multi-input multi-output (UL MIMO) transmission with full power, thereby maintaining a cell coverage similar to that of a single antenna. In addition, according to UL MIMO, spatial diversity gain can be obtained, and throughput improvement can thus be expected.

Hereinafter, embodiments according to the present disclosure will be described in detail with reference to the drawings. Radio communication methods according to the respective embodiments may be applied independently, or may be applied in combination.

Moreover, the terms "antenna" and "antenna port" in embodiments below can be used interchangeably.

In the present disclosure, the term "full power" may be replaced with "power boosting", "maximum power", "extended power", "power higher than that of Rel-15 UE", and the like.

Further, in the present disclosure, the phrase "having UE capability X" (X = 1, 2, or 3) may be replaced with reporting UE capability X, performing full power transmission using the configuration of UE capability X, and the like.

In the present disclosure, the phrase "having coherent capability" (e.g., full coherent, partial coherent, and non coherent) may be replaced with reporting the capability, being configured with coherent, and the like.

Further, a non coherent UE, a partial coherent UE, and a full-coherent UE may be replaced with a UE having capability related to non coherent, a UE having capability related to partial coherent, and a UE having capability related to full coherent, respectively.

Further, the non coherent UE, the partial coherent UE, and the full-coherent UE can refer to UEs in which codebook subsets of "nonCoherent", "partialAndNonCoherent", and "fullyAndPartialAndNonCoherent" are configured in a higher layer, respectively. Moreover, in the present disclosure, the terms "codebook subset" and "codebook" can be used interchangeably.

The non coherent UE, the partial coherent UE, and the full-coherent UE can refer to UEs capable of performing transmission using the non coherent codebook, the partial coherent codebook, and the full-coherent codebook, respectively.

In the following respective embodiments, a case where mode 1 or 2 is related to the SRS resource set whose usage is the codebook has been described, but the present disclosure is not limited thereto. In the respective embodiments, modes 1 or 2 may be replaced with, for example, mode 1 or 2 for SRS resource sets whose usage is non-codebook.

Note that in the present disclosure, "TPMI = matrix of X", "TPMI = X", and "TPMI index = X" may be replaced with each other. Further, the non coherent codebook and the partial coherent codebook may also be referred to as the antenna selection precoder. The full-coherent codebook may also be referred to as a non-antenna selection precoder. A TPMI corresponding to the antenna selection precoder may be referred to as an antenna selection TPMI. A TPMI corresponding to the non-antenna selection precoder may be referred to as a non-antenna selection TPMI.

In the present disclosure, "TPMI precoder", "TPMI group", "one or more TPMIs", "TPMI group enabling full power", "TPMI group supporting full power", and the like may be replaced with each other.

In the present disclosure, the expressions "support...", "report having the capability of... to the network", and the like may be replaced with each other.

In the present disclosure, capability information indicating that mode X (X is an integer; for example, X = 0, 1, or 2) is supported may be referred to as mode X capability information. Further, the term "capability information" in the present disclosure may be simply replaced with the term "information".

The "UE" in the following embodiments is assumed as being a UE that supports mode 2, but is not limited thereto. In addition, an example in which the number of transmitting antenna ports is four will be described in the following embodiments, but the number of transmitting antenna ports may be another number.

(Radio Communication Method)

In the following embodiments, the TPMI group for the full-coherent UE is proposed.

When the TPMI group for the full-coherent UE is introduced, in a case where the codebook subset included in the PUSCH configuration information is non coherent, partial coherent or full coherent (RRC parameter "codebookSubset" = "nonCoherent", "partialAndNonCoherent" or "fullyAndPartialAndNonCoherent"), and the PUSCH configuration information includes the parameter ("ULFPTx") indicating full power transmission, the UE may scale the linear value of the PUSCH transmit power determined based on the path-loss or the like by the power scaling factor s.

In addition, a table defining a different TPMI group related to operation in mode 2 for each of the non coherent UE, the partial coherent UE, and the full-coherent UE may be used. In other words, the definition of the TPMI group may vary depending on the coherent capability. For example, a UE that supports mode 2 and has four transmitting antenna ports (4Tx) may select a TPMI group to report from a table corresponding to the coherent capability.

The number of bits used for TPMI group reporting may depend on the coherent capability. For example, the number of bits may be two for the non coherent UE, four for the partial coherent UE, and X (e.g., X = 3) for the full-coherent UE.

The number of bits used for TPMI group reporting does not have to depend on the coherent capability. For example, the number of bits may be assumed to be X (e.g., X = 4) for any coherent UE.

These values of X may be determined from the codebook subset included in the PUSCH configuration information, may be explicitly or implicitly set by RRC signaling, or may be given by a specification.

<First Embodiment>

In a first embodiment, the TPMI group for the full-coherent UE corresponds to a group defined differently from the TPMI groups (G0 to G6 in Fig. 3A) that have already been agreed to be introduced for the non coherent UE/partial coherent UE.

This is because the TPMI groups (G0 to G6 in Fig. 3A) that have already been agreed to be introduced are limited to coherent port pairs (e.g., a pair of ports 0 and 2 and a pair of ports 1 and 3) of the partial coherent UE, and thus also includes a definition that is not suitable for the full-coherent UE. For example, the full-coherent UE with four transmitting antenna ports can perform switching of any antenna port for full power transmission because all of ports 0 to 3 are coherent. Note that ports 0, 1, 2, and 3 are merely port numbers for convenience, and may each correspond to an arbitrary port number.

Therefore, in the first embodiment, the TPMI groups G0 to G6 for the full-coherent UE may be different from G0 to G6 of Fig. 3A, respectively (note that some of them may be the same).

In the present disclosure, the coherent port pair may be replaced with a coherent subset, a coherent port set, or the like.

Ports included in a certain coherent port pair may be assumed to be coherent with each other. It may be assumed that ports included in one coherent port pair are not coherent with ports included in another coherent port pair. For the full-coherent UE, it may be assumed that any port pair is the coherent port pair.

[One Group Corresponds to One PA Architecture]

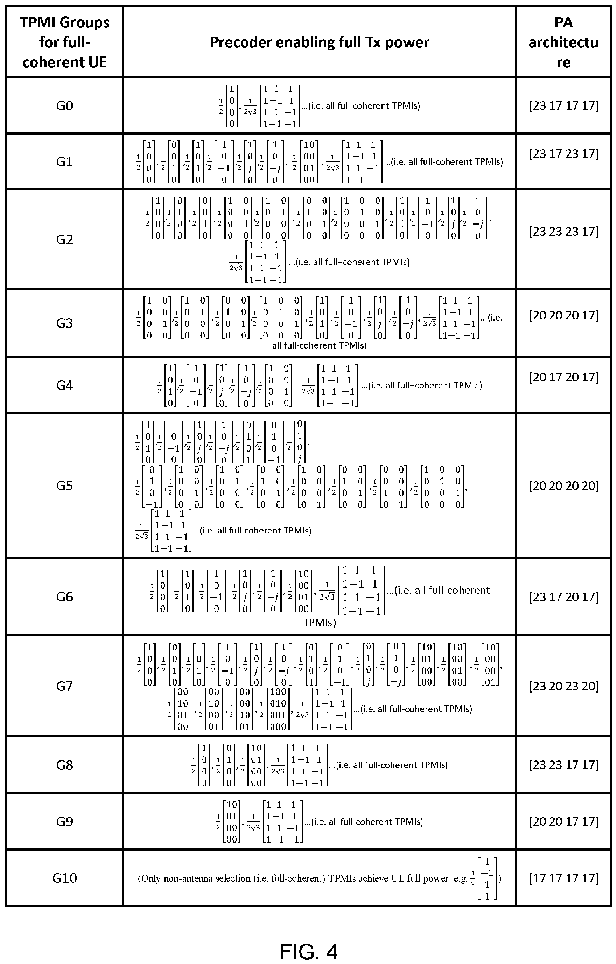

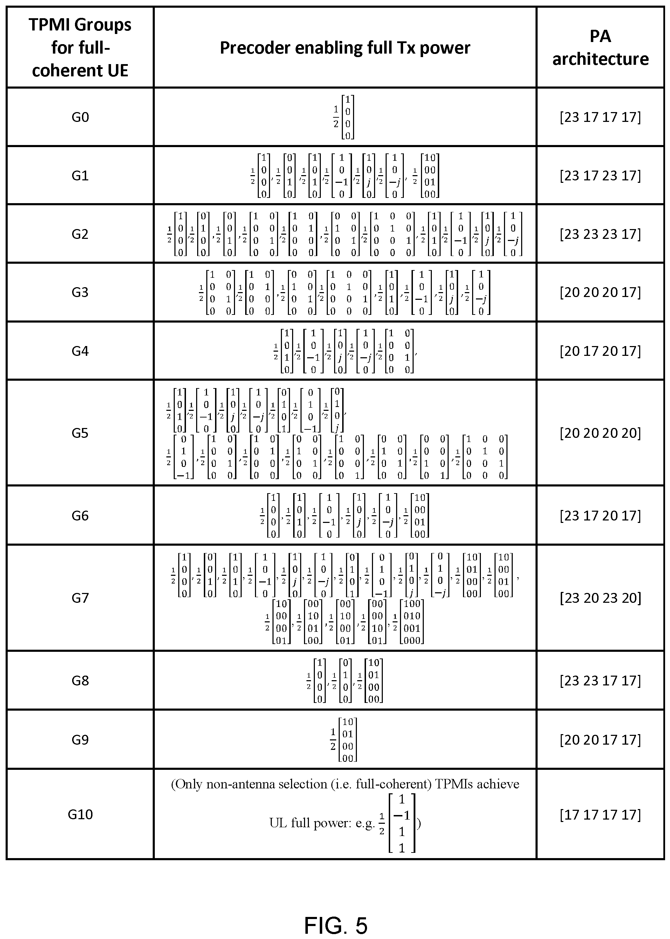

An example in which one group corresponds to one PA architecture will be described with reference to Figs. 4 and 5. Fig. 4 is a diagram illustrating an example of a precoder enabling full power transmission and PA architecture corresponding to each group reported in the first embodiment. In this example and the following examples, an example of a configuration in a case where each PA corresponding to four transmission ports can take three output powers (23 dBm, 20 dBm, and 17 dBm) is illustrated.

The column "Precoder enabling full Tx power" in Fig. 4 shows an example of the precoder enabling full power transmission. In this example, for example, G0 indicates that full power transmission can be performed even with all full-coherent TPMIs (e.g., TPMIs indicating the full-coherent codebook of Fig. 1) in addition to the antenna selection precoder allowing full power transmission for G0 in Fig. 3A (= 1/2 [1 0 0 0]). Note that, in this example and the following drawings, an example of the full-coherent TPMI is as in the following expression.

[Math. 1]

$$\frac{1}{2\sqrt{3}}\begin{bmatrix} 1 & 1 & 1 \\ 1 & -1 & 1 \\ 1 & 1 & -1 \\ 1 & -1 & -1 \end{bmatrix}$$

However, the full-coherent TPMI enabling full power transmission by the UE is not limited thereto.

G10 indicates that, unlike other groups, full power transmission can be performed only with the non-antenna selection precoder (full power transmission cannot be performed with the antenna selection precoder).

The column "PA architecture" in Fig. 4 shows the PA architecture. The PA architecture may indicate output voltages of the PAs corresponding to ports 0, 1, 2, and 3 from the left (or from the right). These ports may be arbitrarily replaced. The UE may assume that full power transmission can be performed by using only a port corresponding to "23". The UE may assume that full power transmission can be performed by using two or more ports each corresponding to "20". The UE may assume that full power transmission can be performed by using four or more ports each corresponding to "17".

The UE may select at least one group from G0 to G10 in the table of Fig. 4 for the full-coherent UE and transmit the TPMI group capability information indicating the selected group to the network.

It may be assumed that the full-coherent UE can perform UL full power transmission based on a specific TPMI group in a case of not reporting the TPMI group capability information. For example, the full-coherent UE that does not report the TPMI group capability information may implement full power transmission based on G10 (that is, full power transmission according to the TPMI with only the non-zero PUSCH port using the full-coherent codebook). In this case, the full-coherent UE does not have to explicitly report G10 as the TPMI group capability information.

Fig. 5 is a diagram illustrating an example of a precoder enabling full power transmission and PA architecture corresponding to each group reported in the first embodiment. Fig. 5 differs from Fig. 4 in that the full-coherent TPMI is not included in the table. Since G0 to G10 in Fig. 4 all support full power transmission with the full-coherent TPMI, Fig. 5 corresponds to a table in which the full-coherent TPMI is omitted. The PA architecture in Fig. 5 is the same as that in Fig. 4.

The UE may select at least one group from G0 to G10 in the table of Fig. 5 for the full-coherent UE and transmit the TPMI group capability information indicating the selected group to the network. Further, as described above, it may be assumed that the full-coherent UE can perform UL full power transmission based on a specific TPMI group in a case of not reporting the TPMI group capability information.

[One Group Corresponds to Plurality of PA Architecture]

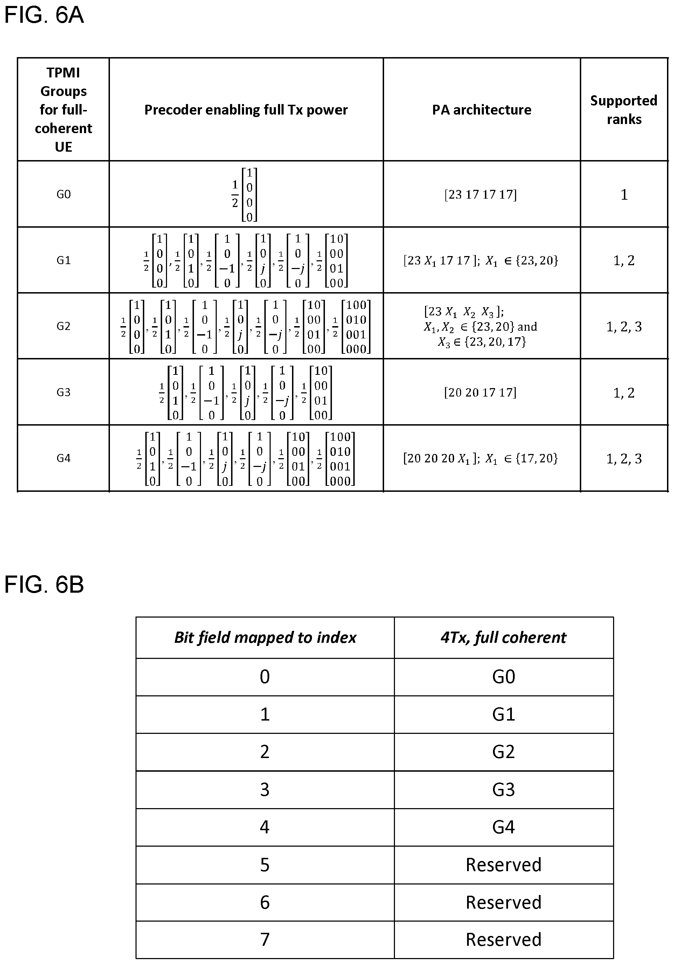

An example in which one group may correspond to a plurality of PA architectures will be described with reference to Figs. 6 to 11. The present inventors have found the configuration of these groups by focusing on how many and which power can be output by each PA rather than how the PAs are arranged, in determining a TPMI group, in consideration of the fact that the full-coherent UE can perform switching of any antenna port.

Figs. 6A and 6B are diagrams illustrating an example of TPMI groups that do not correspond to the PA architectures [20 17 17 17] and [17 17 17 17] and consider antenna port switching between arbitrary ports.

Fig. 6A is a diagram illustrating an example of a TPMI group and a corresponding precoder enabling full power transmission and PA architecture. Similar to Fig. 5, the full-coherent TPMI is not included in the table of Fig. 6A because all groups support full power transmission with the full-coherent TPMI.

The column "Supported ranks" in Fig. 6A shows a rank supported by the PA architecture corresponding to the TPMI group. In this example, the maximum rank for the PA architecture may be determined based on the UE capability (TPMI group).

Fig. 6B is a diagram illustrating an example of the TPMI group capability information indicating the TPMI group of Fig. 6A. In this example, a correspondence between a value of 3-bit TPMI group capability information ("Bit field mapped to index" of the drawing) that the full-coherent UE having four transmitting antenna ports (4Tx) can report and a corresponding group is shown.

In Fig. 6B, each of the values of the bit field of 0 to 4 corresponds to one group (G0 to G4). Meanwhile, although reservation ("Reserved") is prescribed for the values of the bit field of 5 to 7, the configuration is not limited thereto.

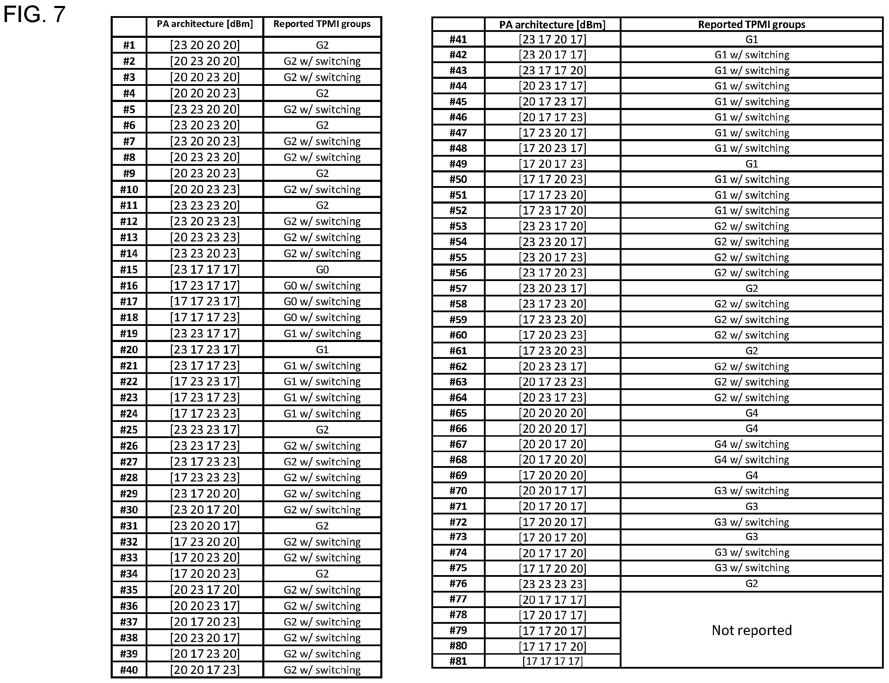

Fig. 7 is a diagram illustrating an example of a correspondence between the PA architecture and the group of Fig. 6A. In this example, an example of a configuration in a case where each PA corresponding to four transmission ports can take three output powers (23 dBm, 20 dBm, and 17 dBm) in consideration of all the UE capabilities 1 to 3 is illustrated.

The leftmost column shows an index for convenience for associating the PA architecture and the TPMI group. In this example, since there are three output powers for four PAs, there are 81 (= $3^4$) possible index values.

Indexes #1 to #64 correspond to the PA architectures of UE capability 3 including one to three output powers of 23 dBm. Indexes #65 to #75 correspond to the PA architectures of UE capability 2 that does not include the output power of 23 dBm. Index #76 corresponds to the PA architecture of UE capability 1 including only the output power of 23 dBm. Indexes #77 to #81 correspond to the PA architectures with which full power transmission cannot be performed with the non coherent precoder or partial coherent precoder.

Mode 2 in which TPMI group reporting is required corresponds to UE capability 2 or 3. Therefore, it may be assumed that the UE does not need to report a TPMI group representing the PA architectures corresponding to indexes #77 to #81 in Fig. 7.

The column "PA architecture" in Fig. 7 shows the PA architecture. The column "Reported TPMI groups" in Fig. 7 indicates a group that can represent the PA architecture. The PA architecture of "GX w/switching" means that it is represented by switching of any port of the PA architecture of group GX (X is an integer).

For example, the PA architecture [17 23 17 17] of #16 can be implemented by switching ports #0 and #1 of the PA architecture ([23 17 17 17] of #15) of group G0.

G0 to G4 can be used to report all required PA architectures.

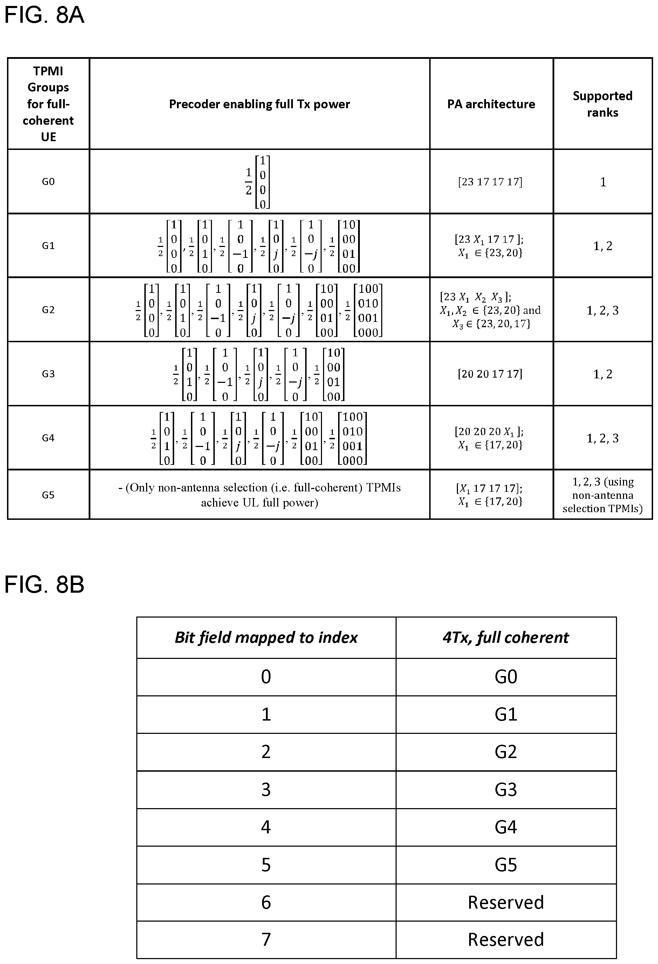

Figs. 8A and 8B are diagrams illustrating an example of TPMI groups that correspond to the PA architectures [20 17 17 17] and [17 17 17 17] and consider antenna port switching between arbitrary ports.

Fig. 8A is different from Fig. 6A in that group G5 indicating that full power transmission can be performed only with the non-antenna selection precoder (full power transmission cannot be performed with the antenna selection precoder) is defined. Fig. 8B is different from Fig. 6B in that the value of the bit field of 5 indicates G5.

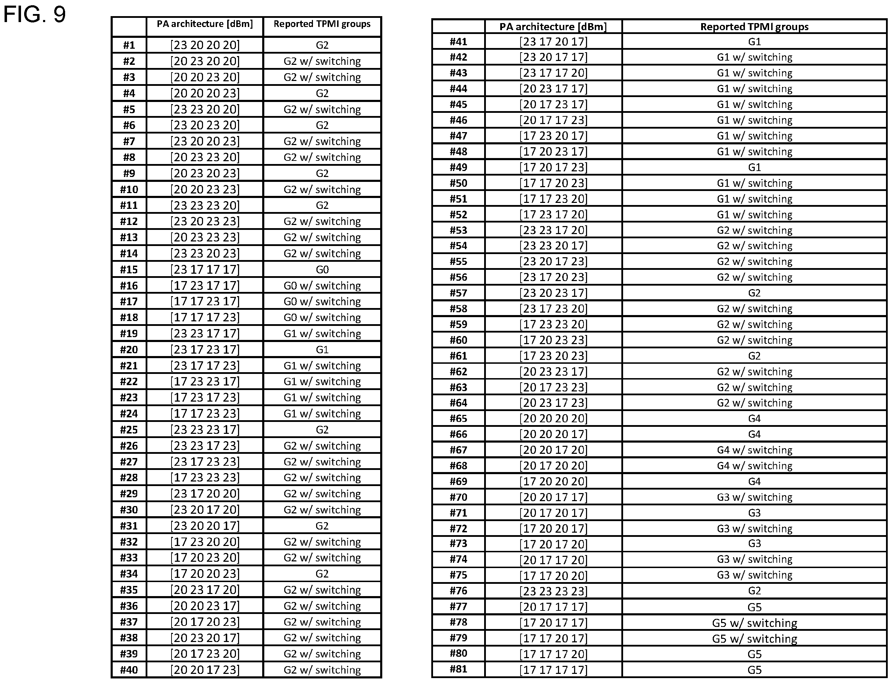

Fig. 9 is a diagram illustrating an example of a correspondence between the PA architecture and the group of Fig. 8A. Fig. 9 is different from Fig. 7 in that indexes #77 to #81 are represented by G5 (or G5 w/switching).

G0 to G5 can be used to report all required PA architectures.

Note that the full-coherent UE with the capability of G5 cannot perform UL full power transmission in a case where the antenna selection TPMI is specified from the network. As an advantage that can be obtained when the UE reports G5, it is conceivable that the network configures an SRS resource set (e.g., an SRS resource set whose usage is the codebook) including more than two SRS resources for the UE of G5. In this case, the UE can use, for example, up to four PUSCH beams based on DCI instruction, so that flexible control can be performed.

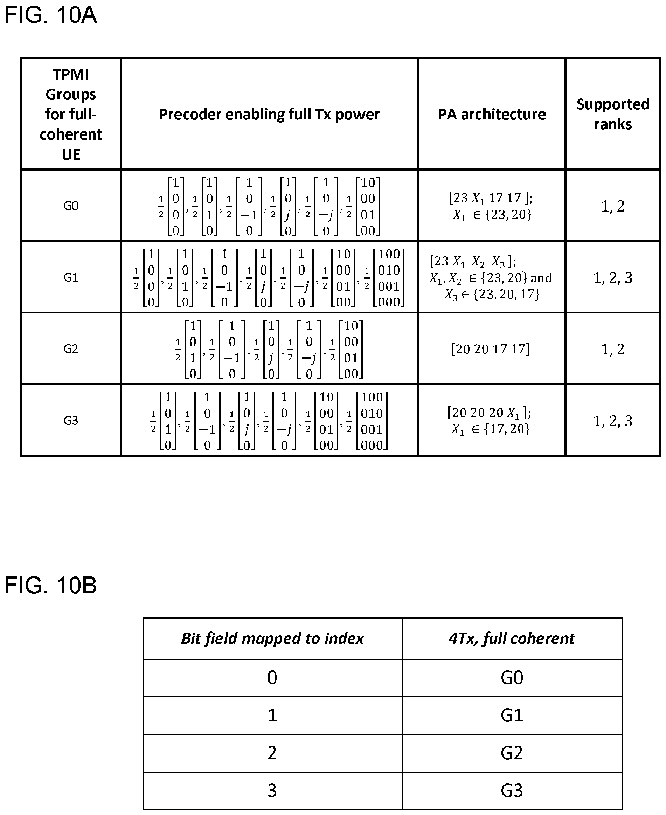

Figs. 10A and 10B are diagrams illustrating an example of TPMI groups that do not correspond to the PA architecture [23 17 17 17] and consider antenna port switching between arbitrary ports.

Fig. 10A corresponds to a table in which G0 of Fig. 6A is deleted and G1 to G4 of Fig. 6A are defined as G0 to G3. The four groups in Fig. 10A can be represented by 2 bits as illustrated in Fig. 10B. The number of TPMI groups (or group sets) to be reported is reduced as compared to the group set as in Fig. 6A, thereby enabling efficient utilization of the capability information.

The group set in Fig. 10A does not include the group (G0 of Fig. 6A) indicating that full power transmission of only one port according to the non coherent TPMI is supported, but full power transmission using a plurality of ports is not supported. That is, in the group set in Fig. 10A, each group supports full power transmission using a plurality of ports.

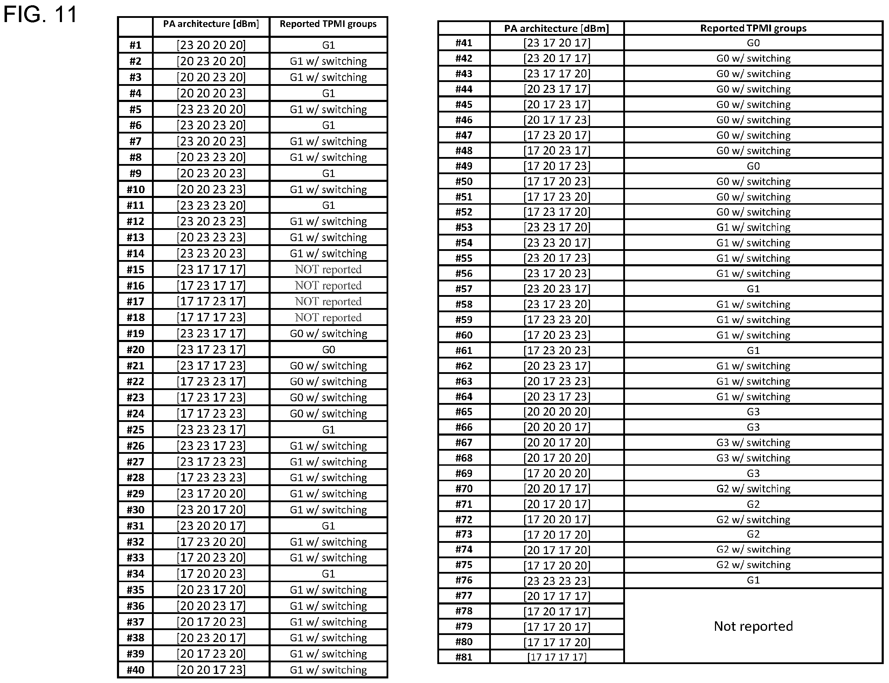

Fig. 11 is a diagram illustrating an example of a correspondence between the PA architecture and the group of Fig. 10A. Fig. 11 is different from Fig. 7 in that indexes #15 to #18 are not reported and G1 to G4 are changed to G0 to G3.

Note that the full-coherent UE that does not report the TPMI group capability information may perform UL full power PUSCH transmission using an arbitrary port (applying antenna port virtualization) in a case of being notified of the non coherent TPMI of four transmission ports (TPMI = 0 to 3 in Fig. 1).

In addition, the full-coherent UE that does not report the TPMI group capability information may perform full power transmission using a plurality of antenna ports (that is, full power transmission according to the TPMI corresponding to the partial coherent codebook or full-coherent codebook).

According to the first embodiment described above, the full-coherent UE can perform determination, reporting, or the like of detailed PA architecture information by using the TPMI group capability information.

<Second Embodiment>

In a second embodiment, the TPMI group for the full-coherent UE includes a TPMI group (G0 to G6 in Fig. 3A) that has already been agreed to be introduced for the non coherent UE/partial coherent UE.

Note that the TPMI groups and group sets described in the second embodiment may be used as the TPMI groups for the non coherent UE/partial coherent UE.

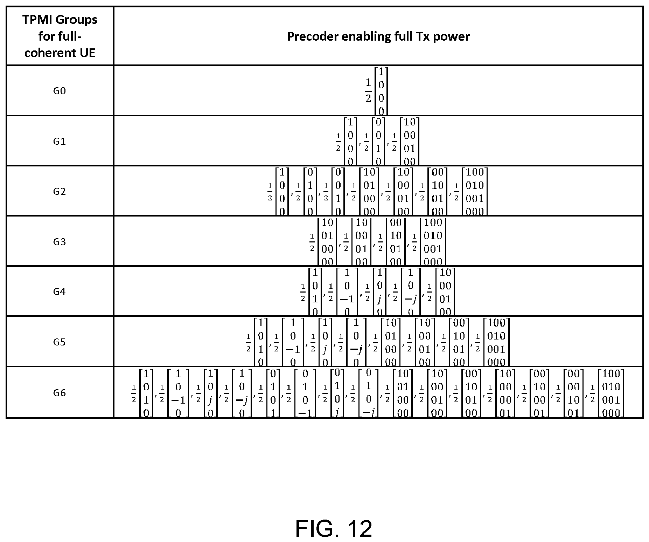

Fig. 12 is a diagram illustrating an example of a TPMI group and a corresponding precoder enabling full power transmission according to the second embodiment. The TPMI groups in Fig. 12 are the same as the existing G0 to G6 in Fig. 3A.

The UE may select at least one group from G0 to G6 in the table of Fig. 12 for the full-coherent UE and transmit TPMI group capability information indicating the selected group to the network.

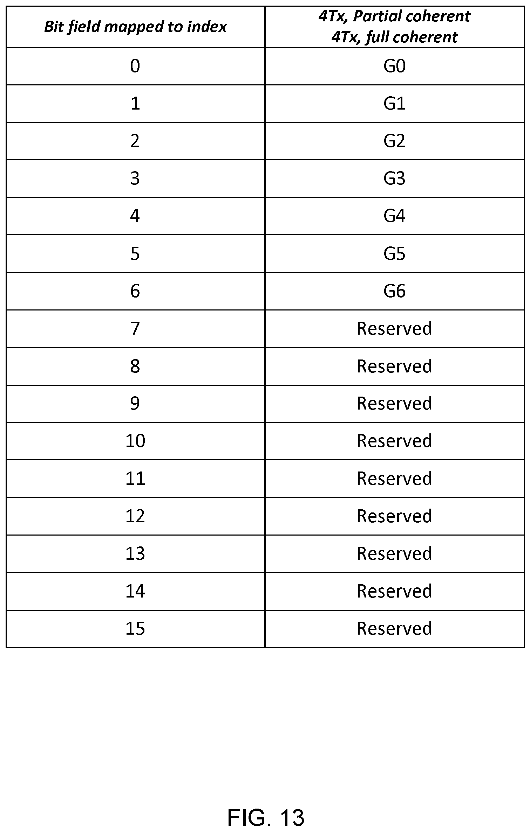

Fig. 13 is a diagram illustrating an example of TPMI group capability information indicating the TPMI group of Fig. 12. In this example, a correspondence between a value of 4-bit TPMI group capability information ("Bit field mapped to index" of the drawing) that the partial coherent UE/full-coherent UE having four transmitting antenna ports (4Tx) can report and a corresponding group is shown.

In Fig. 13, each of the values of the bit field of 0 to 6 corresponds to one group (G0 to G6). Reservation ("Reserved") is prescribed for the values of the bit field of 7 to 15. Note that the correspondence between the value of the bit field and the group is not limited thereto. The same applies to the following drawings related to the bit field.

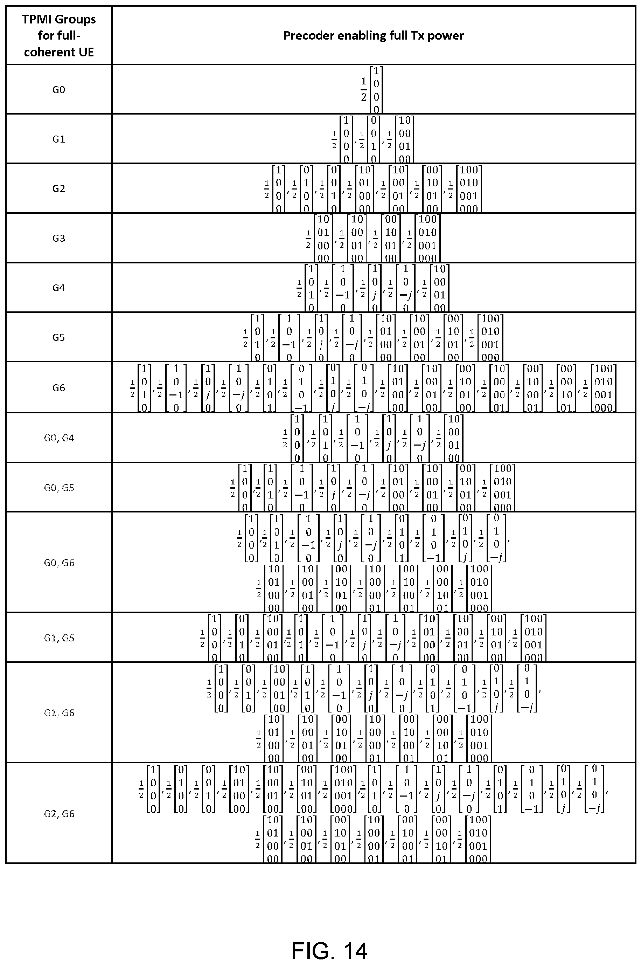

Fig. 14 is a diagram illustrating an example of a TPMI group and a corresponding precoder enabling full power transmission according to the second embodiment. The TPMI groups in Fig. 14 can include combinations of the existing G0 to G6 of Fig. 3A in addition to the existing G0 to G6 of Fig. 3A.

G0 to G6 may correspond to the following PA architectures, respectively.

- G0: 23 dBm for port 0
- G1: 23 dBm for ports 0 and 2
- G2: 23 dBm for ports 0, 1, and 2
- G3: 20 dBm for ports 0, 1, and 2
- G4: 20 dBm for ports 0 and 2

- G5: 20 dBm for ports 0, 1, and 2
- G6: 20 dBm for ports 0, 1, 2, and 3.

The combinations of a plurality of groups may correspond to the following PA configurations, respectively.

- G0 and G4: 23 dBm for port 0, and 20 dBm for port 2
- G0 and G5: 23 dBm for port 0, and 20 dBm for ports 1 and 2
- G0 and G6: 23 dBm for port 0, and 20 dBm for ports 1, 2, and 3
- G1 and G5: 23 dBm for ports 0 and 2, and 20 dBm for port 1
- G1 and G6: 23 dBm for ports 0 and 2, and 20 dBm for ports 1 and 3
- G2 and G6: 23 dBm for ports 0, 1, and 2, and 20 dBm for port 1

The UE may select at least one from the groups or group sets in the table of Fig. 14 for the full-coherent UE and transmit TPMI group capability information indicating the selected group or group set to the network.

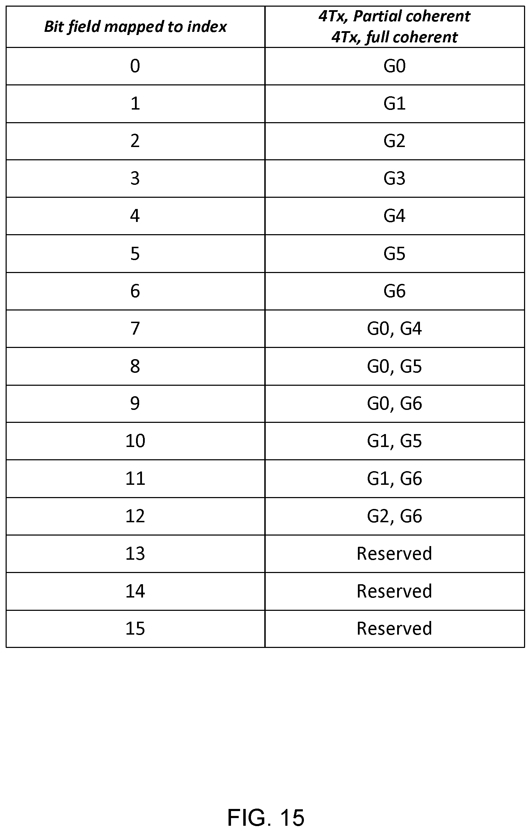

Fig. 15 is a diagram illustrating an example of TPMI group capability information indicating the TPMI group of Fig. 14. Fig. 15 is different from Fig. 13 in that the values of the bit field of 7 to 12 correspond to {G0, G4}, {G0, G5}, {G0, G6}, {G1, G5}, {G1, G6}, and {G2, G6}, respectively.

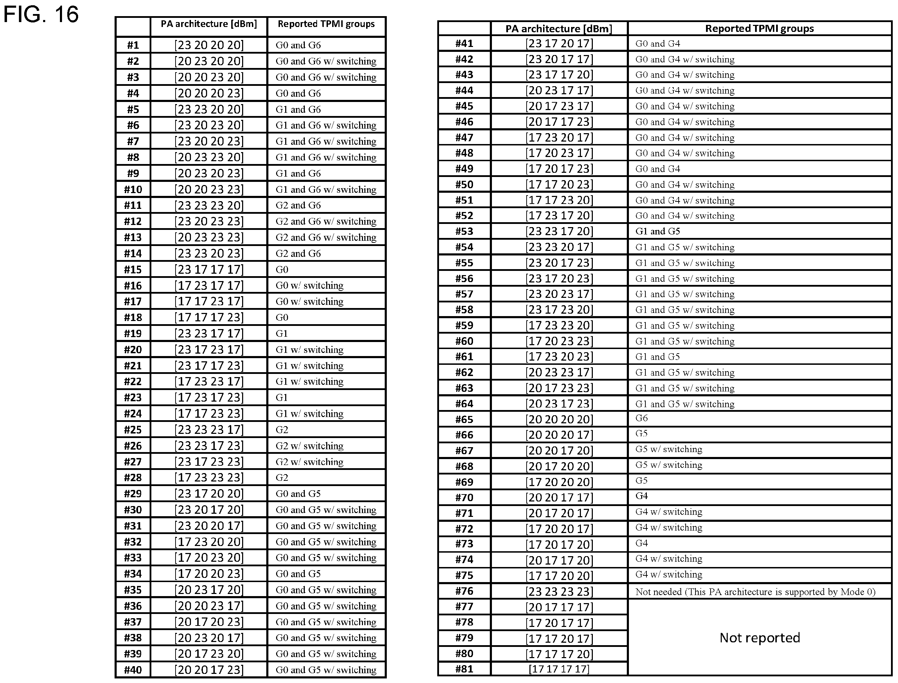

Fig. 16 is a diagram illustrating an example of a correspondence between the PA architecture and the group of Fig. 14. This example is a table similar to that in Fig. 7, and thus an overlapping description will be omitted.

The PA architecture of "GX and GY" in the column "Reported TPMI groups" in Fig. 16 corresponds to {GX, GY} in Fig. 14. In addition, the PA architecture of "GX and GY w/switching" means that it is represented by switching of any port of the PA architecture of a group set GX and GY (X and Y are integers).

Note that the TPMI group in Fig. 14 does not correspond to the PA architecture [23 23 23 23] of index #76 as illustrated in Fig. 16, but since this PA architecture is supported in mode 0 in the first place, it does not need to be reported in mode 2.

The TPMI group in Fig. 14 is suitable in a case where antenna port switching can be performed between an arbitrary port pair (e.g., port 0 can be switched to any of ports 0, 1, 2, and 3). Meanwhile, even for the full-coherent UE, it is also conceivable to perform antenna port switching only between some port pairs (between a port pair included in the coherent port pairs of the partial coherent UE). For example, the UE can switch port 0 only with ports 0 and 2 that constitute the same coherent port pair of the partial coherent UE, and cannot switch port 0 with ports 1 and 3 that belong to a different coherent port pair of the partial coherent UE.

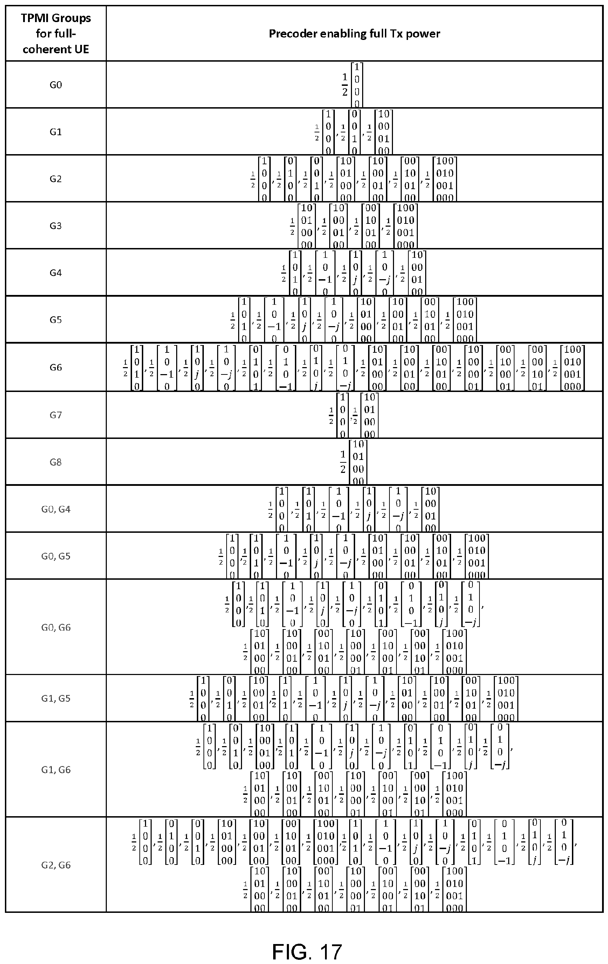

An example of a set of TPMI groups suitable in a case where antenna port switching cannot be performed between an arbitrary port pair will be described with reference to Fig. 17. Fig. 17 is a diagram illustrating an example of a TPMI group and a corresponding precoder enabling full power transmission according to the second embodiment. The TPMI groups of Fig. 17 are different from those of Fig. 12 in that G7 and G8 are added.

G7 and G8 may correspond to the following PA architectures, respectively.

- G7: 23 dBm for port 0, and 20 dBm for port 1
- G8: 20 dBm for ports 0 and 1.

The UE may select at least one from the groups or group sets in the table of Fig. 17 for the full-coherent UE and transmit TPMI group capability information indicating the selected group or group set to the network.

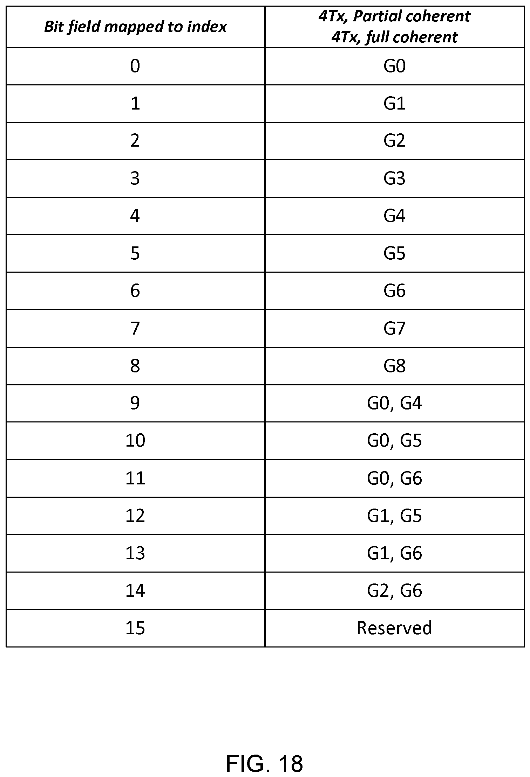

Fig. 18 is a diagram illustrating an example of TPMI group capability information indicating the TPMI group of Fig. 17. Fig. 18 is different from Fig. 13 in that the values of the bit field of 7 to 14 correspond to G7, G8, {G0, G4}, {G0, G5}, {G0, G6}, {G1, G5}, {G1, G6}, and {G2, G6}, respectively.

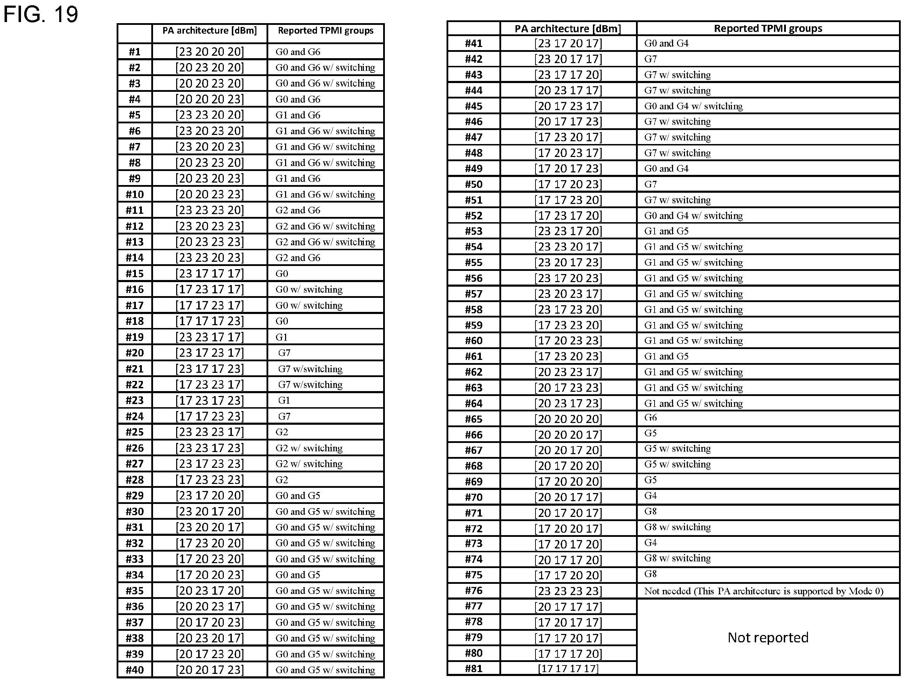

Fig. 19 is a diagram illustrating an example of a correspondence between the PA architecture and the group of Fig. 17. This example is a table similar to that in Fig. 7, and thus an overlapping description will be omitted. In Fig. 19, some PA architectures of Fig. 16 are replaced with G7 or G8.

[Modification of Second Embodiment]

In the group set described in Figs. 12, 14, and 17, still another group (e.g., G10 described in the first embodiment) may be introduced.

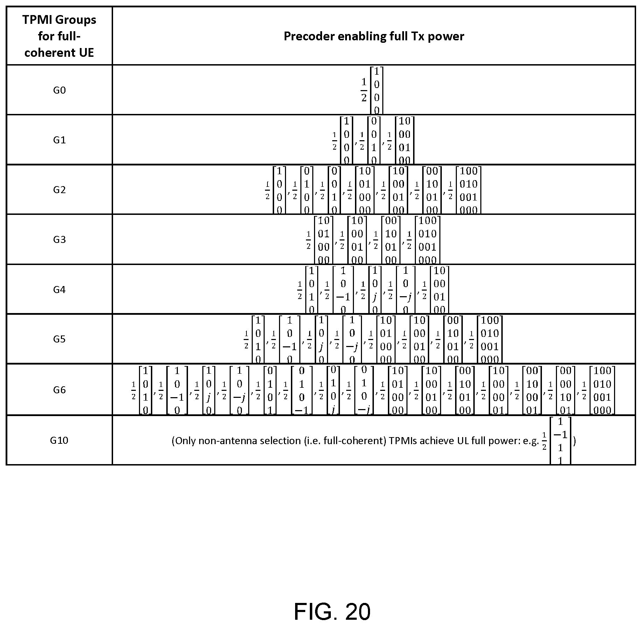

Fig. 20 is a diagram illustrating an example of a TPMI group and a corresponding precoder enabling full power transmission according to a modification of the second embodiment. The TPMI groups of Fig. 20 correspond to the TPMI groups of Fig. 12 added with G10.

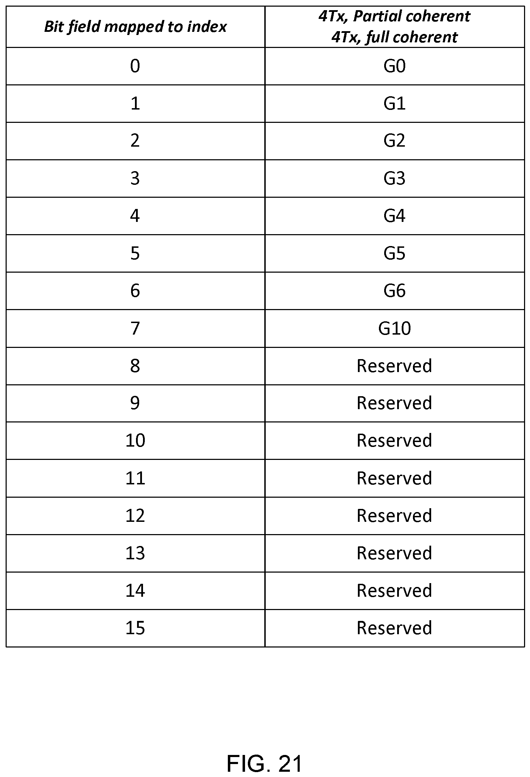

Fig. 21 is a diagram illustrating an example of TPMI group capability information indicating the TPMI group of Fig. 20. Fig. 21 is different from Fig. 13 in that the value of the bit field of 7 corresponds to G10.

In a case where G10 is introduced in Figs. 14 and 17, it is sufficient if the bit field indicating G10 is introduced into the correspondence of the TPMI group capability information in Figs. 15 and 18.

According to the second embodiment described above, the full-coherent UE can perform determination, reporting, or the like of detailed PA architecture information by using the TPMI group capability information.

<Others>

Further, in the above-described embodiments, the description is given on UL transmission using the antenna port assuming a PUSCH, but the full power transmission of at least one of other signals and channels can be controlled in addition to or in place of a PUSCH.

In other words, the antenna port in the above-described respective embodiments can be at least one antenna port of a PUSCH (and demodulation reference signal (DMRS) and phase tracking reference signal (PTRS) for PUSCH), an uplink shared channel (physical uplink control channel (PUCCH)), a random access channel (physical random access channel (PRACH)), an SRS, or the like. The full power transmission can be applied to at least one of these signals and channels.

The UE may determine whether to use the TPMI group capability information of the first embodiment or the TPMI group capability information of the second embodiment depending on whether or not the UE has a capability to support antenna port switching between an arbitrary port pair (or whether or not to report information of the capability) (e.g., the first embodiment in a case of performing reporting).

The UE may determine whether to use the TPMI group capability information of the first embodiment or the TPMI group capability information of the second embodiment depending on whether or not the UE has a capability to support antenna port switching between a port pair included in specific coherent port pairs (or whether or not to report information of the capability) (e.g., the second embodiment in a case of performing reporting).

Note that the numbers "23", "20", and "17" of the present disclosure are values with the output power of a power class 3 UE in mind, and the number is not limited thereto. "23" may be replaced with a first power value (e.g., the maximum output power of a UE of a certain power class), and "20" may be replaced with a second power value (e.g., maximum output power - 3 [dBm]). "17" may be replaced with a third power value (e.g., second power value - 3 [dBm]).

(Radio Communication System)

Hereinafter, a configuration of a radio communication system according to one embodiment of the present disclosure will be described. In this radio communication system, communication is performed using one or a combination of the radio communication methods according to the embodiments of the present disclosure.

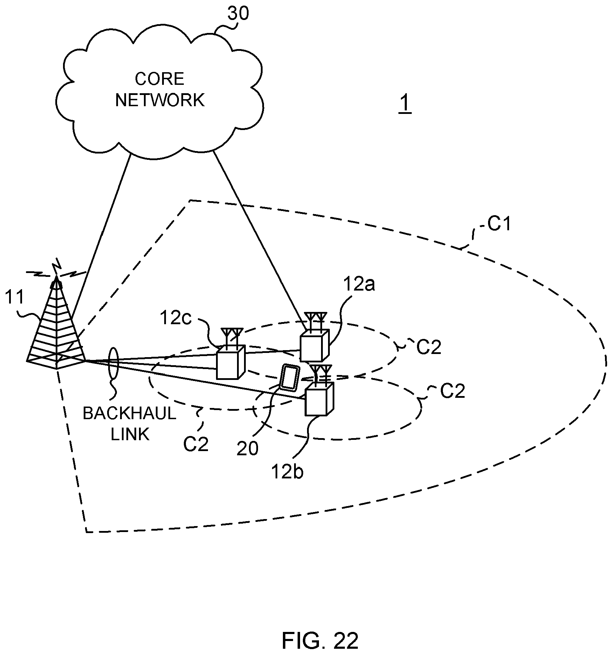

Fig. 22 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Furthermore, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is a MN, and an LTE (E-UTRA) base station (eNB) is an SN.

The radio communication system 1 may support dual connectivity between a plurality of base stations in the same RAT (e.g., dual connectivity in which both a MN and an SN are NR base stations (gNBs) (NR-NR dual connectivity (NN-DC)).

The radio communication system 1 may include a base station 11 that forms a macro cell C1 with a relatively wide coverage and base stations 12 (12a to 12c) that are arranged within the macro cell C1 and form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CCs) or dual connectivity (DC).

Each CC may be included in at least one of a first frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Furthermore, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), or next generation core (NGC).

The user terminal 20 may be a terminal supporting to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (e.g., another single carrier transmission method or another multi-carrier transmission method) may be used as the UL and DL radio access method.

In the radio communication system 1, as downlink channels, a downlink shared channel (physical downlink shared channel (PDSCH)) that is shared by respective user terminals 20, a broadcast channel (physical broadcast channel (PBCH)), a downlink control channel (physical downlink control channel (PDCCH)), or the like may be used.

Furthermore, in the radio communication system 1, as uplink channels, an uplink shared channel (physical uplink shared channel (PUSCH)) that is shared by respective user terminals 20, an uplink control channel (physical uplink control channel (PUCCH)), a random access channel (physical random access channel (PRACH)), or the like may be used.

User data, higher layer control information, the system information block (SIB), and the like are transmitted on the PDSCH. The PUSCH may transmit the user data, higher layer control information, and the like. Furthermore, the master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RSs.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that the SS, the SSB, or the like may also be referred to as a reference signal.

Furthermore, in the radio communication system 1, a sounding reference signal (SRS), a demodulation reference signal (DMRS), and the like may be transmitted as an uplink reference signal (UL-RS). Note that, a DMRS may be referred to as a "user terminal-specific reference signal (UE-specific reference signal)".

(Base Station)

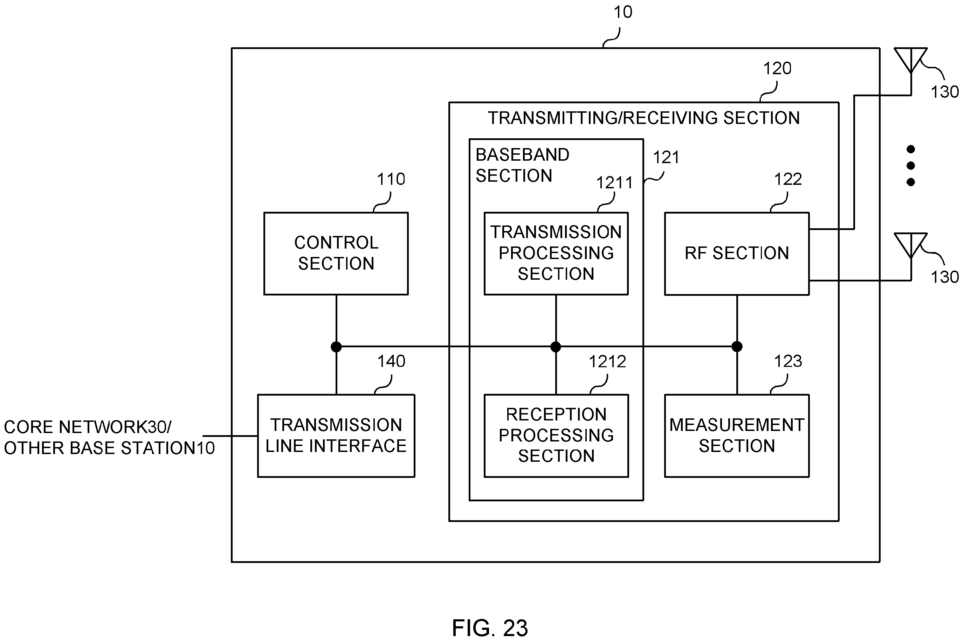

Fig. 23 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (e.g., resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or release) of a communication channel, management of the state of the base station 10, management of a radio resource, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be implemented by a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section or may be implemented by a transmitting section and a receiving section. The transmitting section may be implemented by the transmission processing section 1211 and the RF section 122. The receiving section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam by using digital beam forming (e.g., precoding), analog beam forming (e.g., phase rotation), and the like.

The transmitting/receiving section 120 (transmission processing section 1211) may perform packet data convergence protocol (PDCP) layer processing, radio link control (RLC) layer processing (e.g., RLC retransmission control), medium access control (MAC) layer processing (e.g., HARQ retransmission control), and the like, for example, on data or control information acquired from the control section 110 to generate a bit string to be transmitted.

The transmitting/receiving section 120 (transmission processing section 1211) may perform transmission processing such as channel coding (which may include error correction coding), modulation, mapping, filtering processing, discrete Fourier transform (DFT) processing (as necessary), inverse fast Fourier transform (IFFT) processing, precoding, or digital-analog conversion on the bit string to be transmitted and may output a baseband signal.

The transmitting/receiving section 120 (RF section 122) may perform modulation to a radio frequency band, filtering processing, amplification, and the like on the baseband signal and may transmit a signal in a radio frequency band via a transmission/reception antenna 130.

Meanwhile, the transmitting/receiving section 120 (RF section 122) may perform amplification, filtering processing, demodulation to a baseband signal, and the like on a signal in a radio frequency band received by a transmission/reception antenna 130.

The transmitting/receiving section 120 (reception processing section 1212) may apply, on the acquired baseband signal, reception processing such as analog-digital conversion, fast Fourier transform (FFT) processing, inverse discrete Fourier transform (IDFT) processing (as necessary), filtering processing, demapping, demodulation, decoding (which may include error correction decoding), MAC layer processing, RLC layer processing, or PDCP layer processing to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like and may, for example, acquire or transmit user data (user plane data), control plane data, and the like for the user terminal 20.

Note that the transmitting section and the receiving section of the base station 10 in the present disclosure may be constituted by at least one of the transmitting/receiving section 120, the transmission/reception antenna 130, or the transmission line interface 140.

Moreover, the transmitting/receiving section 120 can receive, from the user terminal 20, at least one of capability information representing a mode for full power transmission to be supported (e.g., mode 1 or 2) or capability information representing a group of transmitted precoding matrix indicators (TPMIs) that support full power transmission (TPMI group capability information).

The control section 110 may assume that the user terminal 20 generates the TPMI group capability information based on a second TPMI group set that is defined differently from a first TPMI group set for a terminal that supports the partial coherent codebook subset.

The transmitting/receiving section 120 may receive the TPMI group capability information corresponding to the TPMI group that supports full power transmission, the TPMI group capability information being transmitted from the user terminal 20.

(User Terminal)

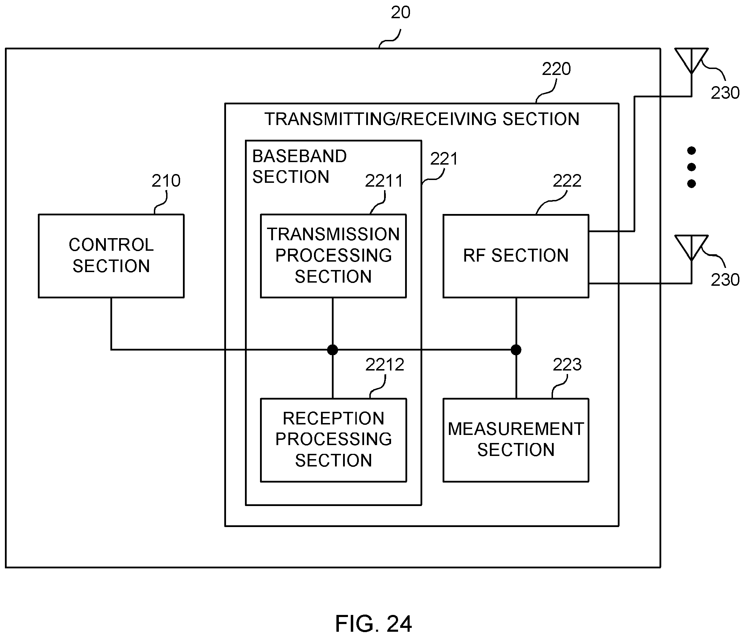

Fig. 24 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be implemented by a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be configured as an integrated transmitting/receiving section, or may be implemented by a transmitting section and a receiving section. The transmitting section may be implemented by the transmission processing section 2211 and the RF section 222. The receiving section may be implemented by the reception processing section 2212, the RF section 222, and the measurement section 223.

The transmission/reception antenna 230 can be implemented by an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (e.g., precoding), analog beam forming (e.g., phase rotation), and the like.

The transmitting/receiving section 220 (transmission processing section 2211) may perform PDCP layer processing, RLC layer processing (e.g., RLC retransmission control), MAC layer processing (e.g., HARQ retransmission control), and the like, for example, on data, control information, and the like acquired from the control section 210, to generate a bit string to be transmitted.

The transmitting/receiving section 220 (transmission processing section 2211) may perform transmission processing such as channel coding (which may include error correction coding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that the transmitting section and the receiving section of the user terminal 20 in the present disclosure may include at least one of the transmitting/receiving section 220 or the transmission/reception antenna 230.

Note that the transmitting section (the transmitting/receiving section 220) may transmit mode 2 capability information indicating that mode 2 of full power transmission is supported. Note that the mode 2 capability information may be replaced with modes-1-and-2 capability information indicating that mode 1 and mode 2 are supported, or may be replaced with mode 0 capability information indicating that mode 0 (UE capability 1) is supported.

The control section 210 may generate the TPMI group capability information based on the second TPMI group set that is defined differently from the first TPMI group set for a terminal (or partial coherent UE) that supports the partial coherent codebook subset.

Note that the second TPMI group set may be a set of TPMI groups for a terminal (or full-coherent UE) that supports the full-coherent codebook subset.

The control section 210 may determine a correspondence (e.g., the tables in Figs. 4, 5, 6A, 8A, 10A, 12, 14, and 17) between a bit (bit value) of the TPMI group capability information and the TPMI group (and/or group set). The control section 210 may specify the TPMI group corresponding to its own PA architecture with reference to at least one table.

Note that the control section 210 does not have to directly store or use these tables. The control section 210 may perform the above processing by any method as long as the correspondences shown in these tables can be determined.

A transmitting section (transmitting/receiving section 220) may transmit the TPMI group capability information corresponding to the TPMI group that supports full power transmission.

The control section 210 may assume that each group of the second TPMI group set includes a TPMI indicating the full-coherent codebook (e.g., the TPMI group set of Fig. 4). For example, the control section 210 may assume that each group of the second TPMI group set corresponds to the TPMI group of Fig. 4.

The control section 210 may assume that the second TPMI group set includes a TPMI group (e.g., G10) indicating that full power transmission can be performed only with the non-antenna selection precoder.

The control section 210 may assume that the second TPMI group set does not include a TPMI group (e.g., G0 in Fig. 6A) indicating that full power transmission using only one port is supported, but full power transmission using a plurality of ports is not supported.

In a case where mode 2 is set, the transmitting section (transmitting/receiving section 220) may transmit an uplink shared channel (PUSCH) with full power by using a precoder based on a TPMI specified by DCI or the like.

The transmitting section (transmitting/receiving section 220) may transmit information indicating a set of TPMI groups as the TPMI group capability information.

(Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

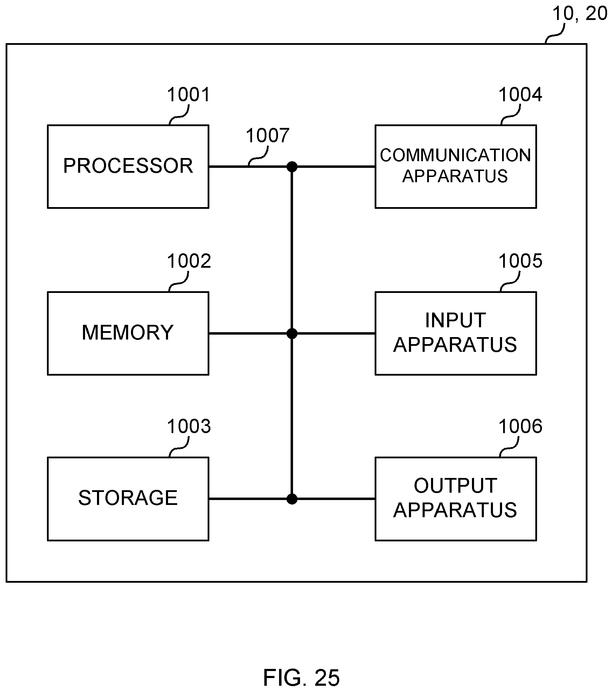

For example, the base station, the user terminal, and the like in one embodiment of the present disclosure may function as a computer that performs the processing of the radio communication method of the present disclosure. Fig. 25 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be read as interchangeable with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be included. Further, the processing may be performed by one processor, or the processing may be performed by two or more processors simultaneously or sequentially, or using other methods. The processor 1001 may be implemented by one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 controls the entire computer by, for example, operating an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (e.g., a compact disc ROM (CD-ROM) and the like), a digital versatile disk, a Blu-ray (registered trademark) disk), a removable disk, a hard disk drive, a smart card, a flash memory device (e.g., a card, a stick, or a key drive), a magnetic stripe, a database, a server, or other appropriate storage media. The storage 1003 may be referred to as a "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (e.g., a display, a speaker, a light emitting diode (LED) lamp, or the like). Note that the input apparatus 1005 and the output apparatus 1006 may be an integrated configuration (e.g., touch panel).

The apparatuses such as the processor 1001 and the memory 1002 are connected by a bus 1007 for communicating information. The bus 1007 may be formed using a single bus, or may be formed using different buses for different connections between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented using at least one of these pieces of hardware.

(Modifications)

Note that terms described in the present disclosure and terms necessary for understanding the present disclosure may be replaced with terms that have the same or similar meanings. For example, a channel, a symbol, and a signal (signal or signaling) may be read as interchangeable with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (e.g., one to thirteen symbols), or may be a period longer than 1 ms. Note that a unit representing a TTI may be referred to as a slot, a mini slot, or the like instead of a subframe.

Here, a TTI refers to, for example, a minimum time unit of scheduling in radio communication. For example, in the LTE system, a base station performs scheduling to allocate radio resources (a frequency bandwidth, transmit power, and the like that can be used in each user terminal) to each user terminal in TTI units. Note that the definition of a TTI is not limited to this.

A TTI may be a transmission time unit of a channel-coded data packet (transport block), a code block, a codeword, etc. or may be a processing unit of scheduling, link adaptation, etc. When a TTI is given, a time interval (e.g., the number of symbols) to which a transport block, a code block, a codeword, or the like is actually mapped may be shorter than the TTI.

When one slot or one mini slot is referred to as a TTI, one or more TTIs (that is, one or more slots or one or more mini slots) may be a minimum time unit of scheduling. The number of slots (the number of mini slots) constituting the minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

A long TTI (such as a normal TTI or a subframe) may be replaced with a TTI having a duration exceeding 1 ms. A short TTI (such as a shortened TTI) may be replaced with a TTI having a TTI length less than the TTI length of a long TTI and more than or equal to 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

An RB may include one or more symbols in the time domain, and may have a length of one slot, one mini slot, one subframe, or one TTI. One TTI, one subframe, etc. may each be comprised of one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource domain of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, an instruction, a command, information, a signal, a bit, a symbol, a chip, etc., which may be referred to throughout the above description, may be represented by a voltage, a current, an electromagnetic wave, a magnetic field or a magnetic particle, an optical field or an optical photon, or any combination of these.

Information, signals, etc. can be output in at least one of a direction from a higher layer to a lower layer or a direction from a lower layer to a higher layer. Information, signals, etc. may be input and output via a plurality of network nodes.

Input and output information, signals, etc. may be stored in a specific location (e.g., memory), or may be managed using a control table. The information, signals, and the like to be input and output can be overwritten, updated, or appended. The output information, signals, and the like may be deleted. Information, signals, etc. that have been input may be transmitted to another apparatus.

Notification of information may be performed not only by using the aspects/embodiments described in the present disclosure but also using another method. For example, the notification of information in the present disclosure may be performed by using physical layer signaling (e.g., downlink control information (DCI) or uplink control information (UCI)), higher layer signaling (e.g., radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message and the like. Further, notification of the MAC signaling may be performed using, for example, an MAC control element (CE).

Also, reporting of given information (for example, reporting of information to the effect that "X holds") does not necessarily have to be sent explicitly, and can be sent implicitly (for example, by not reporting this piece of information, by reporting another piece of information, and the like).

Determination may be performed using a value represented by one bit (0 or 1), or may be performed using a Boolean represented by true or false, or may be performed by comparing numerical values (e.g., comparison with a given value).

Software, regardless of whether it is referred to as software, firmware, middleware, microcode, or a hardware description language, or referred to by another name, should be interpreted broadly to mean a command, a command set, a code, a code segment, a program code, a program, a subprogram, a software module, an application, a software application, a software package, a routine, a subroutine, an object, an executable file, an execution thread, a procedure, a function, etc.

Moreover, software, commands, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (e.g., a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (e.g., three) cells. In a case where the base station accommodates a plurality of cells, the entire coverage area of the base station can be partitioned into a plurality of smaller areas, and each smaller area can provide communication services through a base station subsystem (e.g., small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or mobile station may be called as a transmission apparatus, a reception apparatus, a wireless communication apparatus, and the like. Note that at least one of the base station or the mobile station may be a device mounted on a moving object, a moving object itself, and the like. The moving object may be a transportation (e.g., a car, an airplane, or the like), an unmanned moving object (e.g., a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be read as interchangeable with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be read as interchangeable with terms corresponding to communication between terminals (e.g., "side"). For example, an uplink channel, a downlink channel, etc. may be replaced with a side channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (e.g., a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. Thus, references to first and second elements do not mean that only the two elements can be employed, or that the first element must precede the second element in some form.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, "determining" may be regarded as "determining" receiving (e.g., receiving information), transmitting (e.g., transmitting information), inputting, outputting, accessing (e.g., accessing data in memory), and the like.

Moreover, "determining" may be interpreted as "determining" resolving, selecting, choosing, establishing, comparing, and the like. That is, "determining" may be interpreted as "determining" some action.

In addition, "determining" may be replaced with "assuming", "expecting", "considering", or the like.

The "maximum transmit power" described in the present disclosure may mean a maximum value of transmit power, a nominal UE maximum transmit power, or a rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

**Claims**

1. A terminal comprising:

   a control section that generates transmitted precoding matrix indicator (TPMI) group capability information based on a second TPMI group set (for a terminal that supports a full-coherent codebook subset) that is defined differently from a first TPMI group set for a terminal that supports a partial coherent codebook subset; and
   a transmitting section that transmits the TPMI group capability information corresponding to a TPMI group that supports full power transmission.

2. The terminal according to claim 1, wherein the control section assumes that each group of the second TPMI group set includes a TPMI indicating a full-coherent codebook.

3. The terminal according to claim 1 or 2, wherein the control section assumes that the second TPMI group set includes a TPMI group indicating that full power transmission is performable only with a non-antenna selection precoder.

4. The terminal according to any one of claims 1 to 3, wherein the control section assumes that the second TPMI group set does not include a TPMI group indicating that full power transmission using only one port is supported, but full power transmission using a plurality of ports is not supported.

5. A radio communication method of a terminal, the radio communication method comprising:

   generating transmitted precoding matrix indicator (TPMI) group capability information based on a second TPMI group set (for a terminal that supports a full-coherent codebook subset) that is defined differently from a first TPMI group set for a terminal that supports a partial coherent codebook subset; and
   transmitting the TPMI group capability information corresponding to a TPMI group that supports full power transmission.

6. A base station comprising:

   a control section that assumes that a terminal generates transmitted precoding matrix indicator (TPMI) group capability information based on a second TPMI group set (for a terminal that supports a full-coherent codebook subset) that is defined differently from a first TPMI group set for a terminal that supports a partial coherent codebook subset; and
   a receiving section that receives the TPMI group capability information corresponding to a TPMI group that supports full power transmission, the TPMI group capability information being transmitted from the terminal.

EP 4 152 787 A1

| TPMI INDEX | PRECODING MATRIX W (IN ASCENDING ORDER OF TPMI INDEX FROM LEFT TO RIGHT) | | | | | | | |
|---|---|---|---|---|---|---|---|---|
| 0 – 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 – 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 – 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 – 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

NON COHERENT CODEBOOK

PARTIAL COHERENT CODEBOOK

FULL-COHERENT CODEBOOK

FIG. 1

EP 4 152 787 A1

TRANSMITTING
ANTENNA #0

$P_{PA} = P$

| Full rated PA |

TRANSMITTING
ANTENNA #1

$P_{PA} = P$

| Full rated PA |

TRANSMITTING
ANTENNA #2

$P_{PA} = P$

| Full rated PA |

TRANSMITTING
ANTENNA #3

$P_{PA} = P$

| Full rated PA |

} P

UE capability 1

TRANSMITTING
ANTENNA #0

$P_{PA} < P$ (e.g., P/2)

| Non-full rated PA |

TRANSMITTING
ANTENNA #1

$P_{PA} < P$ (e.g., P/2)

| Non-full rated PA |

TRANSMITTING
ANTENNA #2

$P_{PA} < P$ (e.g., P/2)

| Non-full rated PA |

TRANSMITTING
ANTENNA #3

$P_{PA} < P$ (e.g., P/2)

| Non-full rated PA |

} P

UE capability 2

TRANSMITTING
ANTENNA #0

$P_{PA} = P$

| Full rated PA |

TRANSMITTING
ANTENNA #1

$P_{PA} < P$ (e.g., P/2)

| Non-full rated PA |

TRANSMITTING
ANTENNA #2

$P_{PA} = P$

| Full rated PA |

TRANSMITTING
ANTENNA #3

$P_{PA} < P$ (e.g., P/2)

| Non-full rated PA |

} P

UE capability 3

P: UE MAXIMUM OUTPUT POWER [dBm]
$P_{PA}$ : PA MAXIMUM OUTPUT POWER [dBm]

FIG. 2

# FIG. 3A

| TPMI Groups | |
|---|---|
| G0 | $\frac{1}{2}\begin{bmatrix}1\\0\\0\\0\end{bmatrix}$ |
| G1 | $\{\frac{1}{2}\begin{bmatrix}1\\0\\0\\0\end{bmatrix},\frac{1}{2}\begin{bmatrix}0\\0\\1\\0\end{bmatrix}\}\{\frac{1}{2}\begin{bmatrix}1&0\\0&0\\0&1\\0&0\end{bmatrix}\}$ |
| G2 | $\{\frac{1}{2}\begin{bmatrix}1\\0\\0\\0\end{bmatrix},\frac{1}{2}\begin{bmatrix}0\\1\\0\\0\end{bmatrix},\frac{1}{2}\begin{bmatrix}0\\0\\1\\0\end{bmatrix}\}:\frac{1}{2}\begin{bmatrix}1&0\\0&0\\0&1\\0&0\end{bmatrix},\frac{1}{2}\begin{bmatrix}1&0\\0&1\\0&0\\0&0\end{bmatrix},\frac{1}{2}\begin{bmatrix}0&0\\1&0\\0&1\\0&0\end{bmatrix}:\frac{1}{2}\begin{bmatrix}1&0&0\\0&1&0\\0&0&1\\0&0&0\end{bmatrix}$ |
| G3 | $\{\frac{1}{2}\begin{bmatrix}1&0\\0&0\\0&1\\0&0\end{bmatrix},\frac{1}{2}\begin{bmatrix}1&0\\0&1\\0&0\\0&0\end{bmatrix},\frac{1}{2}\begin{bmatrix}0&0\\1&0\\0&1\\0&0\end{bmatrix}\}:\frac{1}{2}\begin{bmatrix}1&0&0\\0&1&0\\0&0&1\\0&0&0\end{bmatrix}$ |
| G4 | $\{\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix}\};\frac{1}{2}\begin{bmatrix}1&0\\0&0\\0&1\\0&0\end{bmatrix}$ |
| G5 | $\{\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix}\};\{\frac{1}{2}\begin{bmatrix}1&0\\0&0\\0&1\\0&0\end{bmatrix},\frac{1}{2}\begin{bmatrix}1&0\\0&1\\0&0\\0&0\end{bmatrix},\frac{1}{2}\begin{bmatrix}0&0\\1&0\\0&1\\0&0\end{bmatrix}\}:\frac{1}{2}\begin{bmatrix}1&0&0\\0&1&0\\0&0&1\\0&0&0\end{bmatrix}$ |
| G6 | $\{\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix}\};\{\frac{1}{2}\begin{bmatrix}0\\1\\0\\1\end{bmatrix},\frac{1}{2}\begin{bmatrix}0\\1\\0\\-1\end{bmatrix},\frac{1}{2}\begin{bmatrix}0\\1\\0\\j\end{bmatrix},\frac{1}{2}\begin{bmatrix}0\\1\\0\\-j\end{bmatrix}\};$ $\{\frac{1}{2}\begin{bmatrix}1&0\\0&0\\0&1\\0&0\end{bmatrix},\frac{1}{2}\begin{bmatrix}0&0\\1&0\\0&0\\0&1\end{bmatrix},\frac{1}{2}\begin{bmatrix}1&0\\0&1\\0&0\\0&0\end{bmatrix},\frac{1}{2}\begin{bmatrix}1&0\\0&0\\0&0\\0&1\end{bmatrix},\frac{1}{2}\begin{bmatrix}0&0\\1&0\\0&1\\0&0\end{bmatrix},\frac{1}{2}\begin{bmatrix}0&0\\0&1\\1&0\\0&1\end{bmatrix}\}:\frac{1}{2}\begin{bmatrix}1&0&0\\0&1&0\\0&0&1\\0&0&0\end{bmatrix}$ |

# FIG. 3B

| 4Tx, Non coherent | 4Tx, Partial coherent |
|---|---|
| G0 | G0 |
| G1 | G1 |
| G2 | G2 |
| G3 | G3 |
|  | G4 |
|  | G5 |
|  | G6 |

EP 4 152 787 A1

| TPMI Groups for full-coherent UE | Precoder enabling full Tx power | PA architecture |
|---|---|---|
| G0 | $\frac{1}{2}\begin{bmatrix}1\\0\\0\\0\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [23 17 17 17] |
| G1 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [23 17 23 17] |
| G2 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}0\\1\\0\\0\end{bmatrix}, \frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix},$ <br> $\frac{1}{2\sqrt{3}}\begin{bmatrix}1&1&1\\1&-1&1\\1&1&-1\\1&-1&-1\end{bmatrix}$ ...(i.e. all full-coherent TPMIs) | [23 23 23 17] |
| G3 | $\frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [20 20 20 17] |
| G4 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [20 17 20 17] |
| G5 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}0\\1\\0\\-1\end{bmatrix}, \frac{1}{2}\begin{bmatrix}0\\1\\0\\j\end{bmatrix},$ <br> $\frac{1}{2}\begin{bmatrix}0\\1\\0\\-1\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}0&0\\1&0\\0&0\\0&1\end{bmatrix}, \frac{1}{2}\begin{bmatrix}1&0&0\\0&1&0\\0&0&1\\0&0&0\end{bmatrix},$ <br> $\frac{1}{2\sqrt{3}}\begin{bmatrix}1&1&1\\1&-1&1\\1&1&-1\\1&-1&-1\end{bmatrix}$ ...(i.e. all full-coherent TPMIs) | [20 20 20 20] |
| G6 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [23 17 20 17] |
| G7 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}0\\1\\0\\1\end{bmatrix}, \frac{1}{2}\begin{bmatrix}0\\1\\0\\-1\end{bmatrix}, \frac{1}{2}\begin{bmatrix}0\\1\\0\\j\end{bmatrix}, \frac{1}{2}\begin{bmatrix}0\\1\\0\\-j\end{bmatrix}, \frac{1}{2}\begin{bmatrix}10\\01\\00\\00\end{bmatrix}, \frac{1}{2}\begin{bmatrix}10\\00\\01\\00\end{bmatrix}, \frac{1}{2}\begin{bmatrix}10\\00\\00\\01\end{bmatrix},$ <br> $\frac{1}{2}\begin{bmatrix}00\\10\\01\\00\end{bmatrix}, \frac{1}{2}\begin{bmatrix}00\\10\\00\\01\end{bmatrix}, \frac{1}{2}\begin{bmatrix}00\\00\\10\\01\end{bmatrix}, \frac{1}{2}\begin{bmatrix}100\\010\\001\\000\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [23 20 23 20] |
| G8 | $\frac{1}{2}\begin{bmatrix}1\\0\\0\\0\end{bmatrix}, \frac{1}{2}\begin{bmatrix}0\\1\\0\\0\end{bmatrix}, \frac{1}{2}\begin{bmatrix}10\\01\\00\\00\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [23 23 17 17] |
| G9 | $\frac{1}{2}\begin{bmatrix}10\\01\\00\\00\end{bmatrix}, \frac{1}{2\sqrt{3}}\begin{bmatrix}1&1&1\\1&-1&1\\1&1&-1\\1&-1&-1\end{bmatrix}$ ...(i.e. all full-coherent TPMIs) | [20 20 17 17] |
| G10 | (Only non-antenna selection (i.e. full-coherent) TPMIs achieve UL full power: e.g. $\frac{1}{2}\begin{bmatrix}1\\-1\\1\\1\end{bmatrix}$) | [17 17 17 17] |

FIG. 4

| TPMI Groups for full-coherent UE | Precoder enabling full Tx power | PA architecture |
|---|---|---|
| G0 | $\frac{1}{2}\begin{bmatrix}1\\0\\0\\0\end{bmatrix}$ | [23 17 17 17] |
| G1 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}$ | [23 17 23 17] |
| G2 | $\frac{1}{2}\begin{bmatrix}1\\0\\0\\0\end{bmatrix}, \frac{1}{2}\begin{bmatrix}0\\1\\0\\0\end{bmatrix}, \frac{1}{2}\begin{bmatrix}0\\0\\1\\0\end{bmatrix}, \frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\0&1\\0&1\\0&0\end{bmatrix}, \frac{1}{2}\begin{bmatrix}1&0&0\\0&1&0\\0&0&1\\0&0&0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}$ | [23 23 23 17] |
| G3 | $\frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\0&1\\0&1\\0&0\end{bmatrix}, \frac{1}{2}\begin{bmatrix}1&0&0\\0&1&0\\0&0&1\\0&0&0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}$ | [20 20 20 17] |
| G4 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix},$ | [20 17 20 17] |
| G5 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}0\\1\\0\\1\end{bmatrix}, \frac{1}{2}\begin{bmatrix}0\\1\\0\\-1\end{bmatrix}, \frac{1}{2}\begin{bmatrix}0\\1\\0\\j\end{bmatrix},$ $\frac{1}{2}\begin{bmatrix}0\\1\\0\\-1\end{bmatrix}, \frac{1}{2}\begin{bmatrix}1&0\\0&0\\0&1\\0&0\end{bmatrix}, \frac{1}{2}\begin{bmatrix}0&0\\0&1\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\1&0\\0&0\\0&1\end{bmatrix}, \frac{1}{2}\begin{bmatrix}0&0\\0&1\\1&0\\0&1\end{bmatrix}, \frac{1}{2}\begin{bmatrix}1&0&0\\0&1&0\\0&0&1\\0&0&0\end{bmatrix}$ | [20 20 20 20] |
| G6 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}$ | [23 17 20 17] |
| G7 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}0\\1\\0\\1\end{bmatrix}, \frac{1}{2}\begin{bmatrix}0\\1\\0\\-1\end{bmatrix}, \frac{1}{2}\begin{bmatrix}0\\1\\0\\j\end{bmatrix}, \frac{1}{2}\begin{bmatrix}0\\1\\0\\-j\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix},$ $\frac{1}{2}\begin{bmatrix}1&0\\0&0\\0&0\\0&1\end{bmatrix}, \frac{1}{2}\begin{bmatrix}0&0\\1&0\\0&1\\0&0\end{bmatrix}, \frac{1}{2}\begin{bmatrix}0&0\\1&0\\0&0\\0&1\end{bmatrix}, \frac{1}{2}\begin{bmatrix}0&0\\0&0\\1&0\\0&1\end{bmatrix}, \frac{1}{2}\begin{bmatrix}1&0&0\\0&1&0\\0&0&1\\0&0&0\end{bmatrix}$ | [23 20 23 20] |
| G8 | $\frac{1}{2}\begin{bmatrix}1\\0\\0\\0\end{bmatrix}, \frac{1}{2}\begin{bmatrix}0\\1\\0\\0\end{bmatrix}, \frac{1}{2}\begin{bmatrix}1&0\\0&1\\0&0\\0&0\end{bmatrix}$ | [23 23 17 17] |
| G9 | $\frac{1}{2}\begin{bmatrix}1&0\\0&1\\0&0\\0&0\end{bmatrix}$ | [20 20 17 17] |
| G10 | (Only non-antenna selection (i.e. full-coherent) TPMIs achieve UL full power: e.g. $\frac{1}{2}\begin{bmatrix}1\\-1\\1\\1\end{bmatrix}$) | [17 17 17 17] |

FIG. 5

## FIG. 6A

| TPMI Groups for full-coherent UE | Precoder enabling full Tx power | PA architecture | Supported ranks |
|---|---|---|---|
| G0 | $\frac{1}{2}\begin{bmatrix}1\\0\\0\\0\end{bmatrix}$ | $[23\ 17\ 17\ 17]$ | 1 |
| G1 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}$ | $[23\ X_1\ 17\ 17\ ];\ X_1 \in \{23, 20\}$ | 1, 2 |
| G2 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}, \frac{1}{2}\begin{bmatrix}100\\010\\001\\000\end{bmatrix}$ | $[23\ X_1\ X_2\ X_3\ ];$ $X_1, X_2 \in \{23, 20\}$ and $X_3 \in \{23, 20, 17\}$ | 1, 2, 3 |
| G3 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}$ | $[20\ 20\ 17\ 17]$ | 1, 2 |
| G4 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}, \frac{1}{2}\begin{bmatrix}100\\010\\001\\000\end{bmatrix}$ | $[20\ 20\ 20\ X_1\ ];\ X_1 \in \{17, 20\}$ | 1, 2, 3 |

## FIG. 6B

| Bit field mapped to index | 4Tx, full coherent |
|---|---|
| 0 | G0 |
| 1 | G1 |
| 2 | G2 |
| 3 | G3 |
| 4 | G4 |
| 5 | Reserved |
| 6 | Reserved |
| 7 | Reserved |

**FIG. 7**

| | PA architecture [dBm] | Reported TPMI groups |
|---|---|---|
| #1 | [23 20 20 20] | G2 |
| #2 | [20 23 20 20] | G2 w/ switching |
| #3 | [20 20 23 20] | G2 w/ switching |
| #4 | [20 20 20 23] | G2 |
| #5 | [23 23 20 20] | G2 w/ switching |
| #6 | [23 20 23 20] | G2 |
| #7 | [23 20 20 23] | G2 w/ switching |
| #8 | [20 23 23 20] | G2 w/ switching |
| #9 | [20 23 20 23] | G2 |
| #10 | [20 20 23 23] | G2 w/ switching |
| #11 | [23 23 23 20] | G2 |
| #12 | [23 20 23 23] | G2 w/ switching |
| #13 | [20 23 23 23] | G2 w/ switching |
| #14 | [23 23 20 23] | G2 w/ switching |
| #15 | [23 17 17 17] | G0 |
| #16 | [17 23 17 17] | G0 w/ switching |
| #17 | [17 17 23 17] | G0 w/ switching |
| #18 | [17 17 17 23] | G0 w/ switching |
| #19 | [23 23 17 17] | G1 w/ switching |
| #20 | [23 17 23 17] | G1 |
| #21 | [23 17 17 23] | G1 w/ switching |
| #22 | [17 23 23 17] | G1 w/ switching |
| #23 | [17 23 17 23] | G1 w/ switching |
| #24 | [17 17 23 23] | G1 w/ switching |
| #25 | [23 23 23 17] | G2 |
| #26 | [23 23 17 23] | G2 w/ switching |
| #27 | [23 17 23 23] | G2 w/ switching |
| #28 | [17 23 23 23] | G2 w/ switching |
| #29 | [23 17 20 20] | G2 w/ switching |
| #30 | [23 20 17 20] | G2 w/ switching |
| #31 | [23 20 20 17] | G2 |
| #32 | [17 23 20 20] | G2 w/ switching |
| #33 | [17 20 23 20] | G2 w/ switching |
| #34 | [17 20 20 23] | G2 |
| #35 | [20 23 17 20] | G2 w/ switching |
| #36 | [20 20 23 17] | G2 w/ switching |
| #37 | [20 17 20 23] | G2 w/ switching |
| #38 | [20 23 20 17] | G2 w/ switching |
| #39 | [20 17 23 20] | G2 w/ switching |
| #40 | [20 20 17 23] | G2 w/ switching |

| | PA architecture [dBm] | Reported TPMI groups |
|---|---|---|
| #41 | [23 17 20 17] | G1 |
| #42 | [23 20 17 17] | G1 w/ switching |
| #43 | [23 17 17 20] | G1 w/ switching |
| #44 | [20 23 17 17] | G1 w/ switching |
| #45 | [20 17 23 17] | G1 w/ switching |
| #46 | [20 17 17 23] | G1 w/ switching |
| #47 | [17 23 20 17] | G1 w/ switching |
| #48 | [17 20 23 17] | G1 w/ switching |
| #49 | [17 20 17 23] | G1 |
| #50 | [17 17 20 23] | G1 w/ switching |
| #51 | [17 17 23 20] | G1 w/ switching |
| #52 | [17 23 17 20] | G1 w/ switching |
| #53 | [23 23 17 20] | G2 w/ switching |
| #54 | [23 23 20 17] | G2 w/ switching |
| #55 | [23 20 17 23] | G2 w/ switching |
| #56 | [23 17 20 23] | G2 w/ switching |
| #57 | [23 20 23 17] | G2 |
| #58 | [23 17 23 20] | G2 w/ switching |
| #59 | [17 23 23 20] | G2 w/ switching |
| #60 | [17 20 23 23] | G2 w/ switching |
| #61 | [17 23 20 23] | G2 |
| #62 | [20 23 23 17] | G2 w/ switching |
| #63 | [20 17 23 23] | G2 w/ switching |
| #64 | [20 23 17 23] | G2 w/ switching |
| #65 | [20 20 20 20] | G4 |
| #66 | [20 20 20 17] | G4 |
| #67 | [20 20 17 20] | G4 w/ switching |
| #68 | [20 17 20 20] | G4 w/ switching |
| #69 | [17 20 20 20] | G4 |
| #70 | [20 20 17 17] | G3 w/ switching |
| #71 | [20 17 20 17] | G3 |
| #72 | [17 20 20 17] | G3 w/ switching |
| #73 | [17 20 17 20] | G3 |
| #74 | [20 17 17 20] | G3 w/ switching |
| #75 | [17 17 20 20] | G3 w/ switching |
| #76 | [23 23 23 23] | G2 |
| #77 | [20 17 17 17] | |
| #78 | [17 20 17 17] | |
| #79 | [17 17 20 17] | Not reported |
| #80 | [17 17 17 20] | |
| #81 | [17 17 17 17] | |

## FIG. 8A

| TPMI Groups for full-coherent UE | Precoder enabling full Tx power | PA architecture | Supported ranks |
|---|---|---|---|
| G0 | $\frac{1}{2}\begin{bmatrix}1\\0\\0\\0\end{bmatrix}$ | [23 17 17 17] | 1 |
| G1 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}$ | $[23\ X_1\ 17\ 17];$ $X_1 \in \{23,20\}$ | 1, 2 |
| G2 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}, \frac{1}{2}\begin{bmatrix}1&0&0\\0&1&0\\0&0&1\\0&0&0\end{bmatrix}$ | $[23\ X_1\ X_2\ X_3];$ $X_1,X_2 \in \{23,20\}$ and $X_3 \in \{23,20,17\}$ | 1, 2, 3 |
| G3 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}$ | [20 20 17 17] | 1, 2 |
| G4 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}, \frac{1}{2}\begin{bmatrix}1&0&0\\0&1&0\\0&0&1\\0&0&0\end{bmatrix}$ | $[20\ 20\ 20\ X_1];$ $X_1 \in \{17,20\}$ | 1, 2, 3 |
| G5 | - (Only non-antenna selection (i.e. full-coherent) TPMIs achieve UL full power) | $[X_1\ 17\ 17\ 17];$ $X_1 \in \{17,20\}$ | 1, 2, 3 (using non-antenna selection TPMIs) |

## FIG. 8B

| Bit field mapped to index | 4Tx, full coherent |
|---|---|
| 0 | G0 |
| 1 | G1 |
| 2 | G2 |
| 3 | G3 |
| 4 | G4 |
| 5 | G5 |
| 6 | Reserved |
| 7 | Reserved |

FIG. 9

| | PA architecture [dBm] | Reported TPMI groups |
|---|---|---|
| #1 | [23 20 20 20] | G2 |
| #2 | [20 23 20 20] | G2 w/ switching |
| #3 | [20 20 23 20] | G2 w/ switching |
| #4 | [20 20 20 23] | G2 |
| #5 | [23 23 20 20] | G2 w/ switching |
| #6 | [23 20 23 20] | G2 |
| #7 | [23 20 20 23] | G2 w/ switching |
| #8 | [20 23 23 20] | G2 w/ switching |
| #9 | [20 23 20 23] | G2 |
| #10 | [20 20 23 23] | G2 w/ switching |
| #11 | [23 23 23 20] | G2 |
| #12 | [23 20 23 23] | G2 w/ switching |
| #13 | [20 23 23 23] | G2 w/ switching |
| #14 | [23 23 20 23] | G2 w/ switching |
| #15 | [23 17 17 17] | G0 |
| #16 | [17 23 17 17] | G0 w/ switching |
| #17 | [17 17 23 17] | G0 w/ switching |
| #18 | [17 17 17 23] | G0 w/ switching |
| #19 | [23 23 17 17] | G1 w/ switching |
| #20 | [23 17 23 17] | G1 |
| #21 | [23 17 17 23] | G1 w/ switching |
| #22 | [17 23 23 17] | G1 w/ switching |
| #23 | [17 23 17 23] | G1 w/ switching |
| #24 | [17 17 23 23] | G1 w/ switching |
| #25 | [23 23 23 17] | G2 |
| #26 | [23 23 17 23] | G2 w/ switching |
| #27 | [23 17 23 23] | G2 w/ switching |
| #28 | [17 23 23 23] | G2 w/ switching |
| #29 | [23 17 20 20] | G2 w/ switching |
| #30 | [23 20 17 20] | G2 w/ switching |
| #31 | [23 20 20 17] | G2 |
| #32 | [17 23 20 20] | G2 w/ switching |
| #33 | [17 20 23 20] | G2 w/ switching |
| #34 | [17 20 20 23] | G2 |
| #35 | [20 23 17 20] | G2 w/ switching |
| #36 | [20 20 23 17] | G2 w/ switching |
| #37 | [20 17 20 23] | G2 w/ switching |
| #38 | [20 23 20 17] | G2 w/ switching |
| #39 | [20 17 23 20] | G2 w/ switching |
| #40 | [20 20 17 23] | G2 w/ switching |

| | PA architecture [dBm] | Reported TPMI groups |
|---|---|---|
| #41 | [23 17 20 17] | G1 |
| #42 | [23 20 17 17] | G1 w/ switching |
| #43 | [23 17 17 20] | G1 w/ switching |
| #44 | [20 23 17 17] | G1 w/ switching |
| #45 | [20 17 23 17] | G1 w/ switching |
| #46 | [20 17 17 23] | G1 w/ switching |
| #47 | [17 23 20 17] | G1 w/ switching |
| #48 | [17 20 23 17] | G1 w/ switching |
| #49 | [17 20 17 23] | G1 |
| #50 | [17 17 20 23] | G1 w/ switching |
| #51 | [17 17 23 20] | G1 w/ switching |
| #52 | [17 23 17 20] | G1 w/ switching |
| #53 | [23 23 17 20] | G2 w/ switching |
| #54 | [23 23 20 17] | G2 w/ switching |
| #55 | [23 20 17 23] | G2 w/ switching |
| #56 | [23 17 20 23] | G2 w/ switching |
| #57 | [23 20 23 17] | G2 |
| #58 | [23 17 23 20] | G2 w/ switching |
| #59 | [17 23 23 20] | G2 w/ switching |
| #60 | [17 20 23 23] | G2 w/ switching |
| #61 | [17 23 20 23] | G2 |
| #62 | [20 23 23 17] | G2 w/ switching |
| #63 | [20 17 23 23] | G2 w/ switching |
| #64 | [20 23 17 23] | G2 w/ switching |
| #65 | [20 20 20 20] | G4 |
| #66 | [20 20 20 17] | G4 |
| #67 | [20 20 17 20] | G4 w/ switching |
| #68 | [20 17 20 20] | G4 w/ switching |
| #69 | [17 20 20 20] | G4 |
| #70 | [20 20 17 17] | G3 w/ switching |
| #71 | [20 17 20 17] | G3 |
| #72 | [17 20 20 17] | G3 w/ switching |
| #73 | [17 20 17 20] | G3 |
| #74 | [20 17 17 20] | G3 w/ switching |
| #75 | [17 17 20 20] | G3 w/ switching |
| #76 | [23 23 23 23] | G2 |
| #77 | [20 17 17 17] | G5 |
| #78 | [17 20 17 17] | G5 w/ switching |
| #79 | [17 17 20 17] | G5 w/ switching |
| #80 | [17 17 17 20] | G5 |
| #81 | [17 17 17 17] | G5 |

## FIG. 10A

| TPMI Groups for full-coherent UE | Precoder enabling full Tx power | PA architecture | Supported ranks |
|---|---|---|---|
| G0 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}$ | $[23\ X_1\ 17\ 17\ ]$; $X_1 \in \{23, 20\}$ | 1, 2 |
| G1 | $\frac{1}{2}\begin{bmatrix}1\\0\\0\\0\end{bmatrix}, \frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}, \frac{1}{2}\begin{bmatrix}100\\010\\001\\000\end{bmatrix}$ | $[23\ X_1\ X_2\ X_3\ ]$; $X_1, X_2 \in \{23, 20\}$ and $X_3 \in \{23, 20, 17\}$ | 1, 2, 3 |
| G2 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}$ | $[20\ 20\ 17\ 17]$ | 1, 2 |
| G3 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}10\\00\\01\\00\end{bmatrix}, \frac{1}{2}\begin{bmatrix}100\\010\\001\\000\end{bmatrix}$ | $[20\ 20\ 20\ X_1\ ]$; $X_1 \in \{17, 20\}$ | 1, 2, 3 |

## FIG. 10B

| Bit field mapped to index | 4Tx, full coherent |
|---|---|
| 0 | G0 |
| 1 | G1 |
| 2 | G2 |
| 3 | G3 |

FIG. 11

| | PA architecture [dBm] | Reported TPMI groups |
|---|---|---|
| #1 | [23 20 20 20] | G1 |
| #2 | [20 23 20 20] | G1 w/ switching |
| #3 | [20 20 23 20] | G1 w/ switching |
| #4 | [20 20 20 23] | G1 |
| #5 | [23 23 20 20] | G1 w/ switching |
| #6 | [23 20 23 20] | G1 |
| #7 | [23 20 20 23] | G1 w/ switching |
| #8 | [20 23 23 20] | G1 w/ switching |
| #9 | [20 23 20 23] | G1 |
| #10 | [20 20 23 23] | G1 w/ switching |
| #11 | [23 23 23 20] | G1 |
| #12 | [23 20 23 23] | G1 w/ switching |
| #13 | [20 23 23 23] | G1 w/ switching |
| #14 | [23 23 20 23] | G1 w/ switching |
| #15 | [23 17 17 17] | NOT reported |
| #16 | [17 23 17 17] | NOT reported |
| #17 | [17 17 23 17] | NOT reported |
| #18 | [17 17 17 23] | NOT reported |
| #19 | [23 23 17 17] | G0 w/ switching |
| #20 | [23 17 23 17] | G0 |
| #21 | [23 17 17 23] | G0 w/ switching |
| #22 | [17 23 23 17] | G0 w/ switching |
| #23 | [17 23 17 23] | G0 w/ switching |
| #24 | [17 17 23 23] | G0 w/ switching |
| #25 | [23 23 23 17] | G1 |
| #26 | [23 23 17 23] | G1 w/ switching |
| #27 | [23 17 23 23] | G1 w/ switching |
| #28 | [17 23 23 23] | G1 w/ switching |
| #29 | [23 17 20 20] | G1 w/ switching |
| #30 | [23 20 17 20] | G1 w/ switching |
| #31 | [23 20 20 17] | G1 |
| #32 | [17 23 20 20] | G1 w/ switching |
| #33 | [17 20 23 20] | G1 w/ switching |
| #34 | [17 20 20 23] | G1 |
| #35 | [20 23 17 20] | G1 w/ switching |
| #36 | [20 20 23 17] | G1 w/ switching |
| #37 | [20 17 20 23] | G1 w/ switching |
| #38 | [20 23 20 17] | G1 w/ switching |
| #39 | [20 17 23 20] | G1 w/ switching |
| #40 | [20 20 17 23] | G1 w/ switching |

| | PA architecture [dBm] | Reported TPMI groups |
|---|---|---|
| #41 | [23 17 20 17] | G0 |
| #42 | [23 20 17 17] | G0 w/ switching |
| #43 | [23 17 17 20] | G0 w/ switching |
| #44 | [20 23 17 17] | G0 w/ switching |
| #45 | [20 17 23 17] | G0 w/ switching |
| #46 | [20 17 17 23] | G0 w/ switching |
| #47 | [17 23 20 17] | G0 w/ switching |
| #48 | [17 20 23 17] | G0 w/ switching |
| #49 | [17 20 17 23] | G0 |
| #50 | [17 17 20 23] | G0 w/ switching |
| #51 | [17 17 23 20] | G0 w/ switching |
| #52 | [17 23 17 20] | G0 w/ switching |
| #53 | [23 23 17 20] | G1 w/ switching |
| #54 | [23 23 20 17] | G1 w/ switching |
| #55 | [23 20 17 23] | G1 w/ switching |
| #56 | [23 17 20 23] | G1 w/ switching |
| #57 | [23 20 23 17] | G1 |
| #58 | [23 17 23 20] | G1 w/ switching |
| #59 | [17 23 23 20] | G1 w/ switching |
| #60 | [17 20 23 23] | G1 w/ switching |
| #61 | [17 23 20 23] | G1 |
| #62 | [20 23 23 17] | G1 w/ switching |
| #63 | [20 17 23 23] | G1 w/ switching |
| #64 | [20 23 17 23] | G1 w/ switching |
| #65 | [20 20 20 20] | G3 |
| #66 | [20 20 20 17] | G3 |
| #67 | [20 20 17 20] | G3 w/ switching |
| #68 | [20 17 20 20] | G3 w/ switching |
| #69 | [17 20 20 20] | G3 |
| #70 | [20 20 17 17] | G2 w/ switching |
| #71 | [20 17 20 17] | G2 |
| #72 | [17 20 20 17] | G2 w/ switching |
| #73 | [17 20 17 20] | G2 |
| #74 | [20 17 17 20] | G2 w/ switching |
| #75 | [17 17 20 20] | G2 w/ switching |
| #76 | [23 23 23 23] | G1 |
| #77 | [20 17 17 17] | |
| #78 | [17 20 17 17] | |
| #79 | [17 17 20 17] | Not reported |
| #80 | [17 17 17 20] | |
| #81 | [17 17 17 17] | |

EP 4 152 787 A1

| TPMI Groups for full-coherent UE | Precoder enabling full Tx power |
|---|---|
| G0 | $\frac{1}{2}\begin{bmatrix}1\\0\\0\\0\end{bmatrix}$ |
| G1 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}1&0\\0&0\\0&1\\0&0\end{bmatrix}$ |
| G2 | $\frac{1}{2}\begin{bmatrix}1\\0\\0\\0\end{bmatrix}, \frac{1}{2}\begin{bmatrix}0\\1\\0\\0\end{bmatrix}, \frac{1}{2}\begin{bmatrix}0\\0\\1\\0\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}$ |
| G3 | $\frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}$ |
| G4 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}$ |
| G5 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}$ |
| G6 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}0\\1\\0\\1\end{bmatrix}, \frac{1}{2}\begin{bmatrix}0\\1\\0\\-1\end{bmatrix}, \frac{1}{2}\begin{bmatrix}0\\1\\0\\j\end{bmatrix}, \frac{1}{2}\begin{bmatrix}0\\1\\0\\-j\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0\\0&1\\0&0\\0&1\end{bmatrix}, \frac{1}{2}\begin{bmatrix}0&0\\1&0\\0&0\\0&1\end{bmatrix}, \frac{1}{2}\begin{bmatrix}0&0\\1&0\\1&0\\0&1\end{bmatrix}, \frac{1}{2}\begin{bmatrix}1&0&0\\0&1&0\\0&0&1\\0&0&0\end{bmatrix}$ |

FIG. 12

| Bit field mapped to index | 4Tx, Partial coherent<br>4Tx, full coherent |
|---|---|
| 0 | G0 |
| 1 | G1 |
| 2 | G2 |
| 3 | G3 |
| 4 | G4 |
| 5 | G5 |
| 6 | G6 |
| 7 | Reserved |
| 8 | Reserved |
| 9 | Reserved |
| 10 | Reserved |
| 11 | Reserved |
| 12 | Reserved |
| 13 | Reserved |
| 14 | Reserved |
| 15 | Reserved |

FIG. 13

| TPMI Groups for full-coherent UE | Precoder enabling full Tx power |
|---|---|
| G0 | $\frac{1}{2}\begin{bmatrix}1\\0\\0\\0\end{bmatrix}$ |
| G1 | $\frac{1}{2}\begin{bmatrix}1\\0\\0\\0\end{bmatrix},\frac{1}{2}\begin{bmatrix}0\\0\\1\\0\end{bmatrix},\frac{1}{2}\begin{bmatrix}10\\00\\01\\00\end{bmatrix}$ |
| G2 | $\frac{1}{2}\begin{bmatrix}1\\0\\0\\0\end{bmatrix},\frac{1}{2}\begin{bmatrix}0\\1\\0\\0\end{bmatrix},\frac{1}{2}\begin{bmatrix}0\\0\\1\\0\end{bmatrix},\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}100\\010\\001\\000\end{bmatrix}$ |
| G3 | $\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}100\\010\\001\\000\end{bmatrix}$ |
| G4 | $\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}10\\00\\01\\00\end{bmatrix}$ |
| G5 | $\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}100\\010\\001\\000\end{bmatrix}$ |
| G6 | $\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}0\\1\\0\\-1\end{bmatrix},\frac{1}{2}\begin{bmatrix}0\\1\\0\\j\end{bmatrix},\frac{1}{2}\begin{bmatrix}0\\1\\0\\-j\end{bmatrix},\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}10\\00\\00\\01\end{bmatrix},\frac{1}{2}\begin{bmatrix}00\\10\\00\\01\end{bmatrix},\frac{1}{2}\begin{bmatrix}00\\00\\10\\01\end{bmatrix},\frac{1}{2}\begin{bmatrix}100\\010\\001\\000\end{bmatrix}$ |
| G0, G4 | $\frac{1}{2}\begin{bmatrix}1\\0\\0\\0\end{bmatrix},\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}10\\00\\01\\00\end{bmatrix}$ |
| G0, G5 | $\frac{1}{2}\begin{bmatrix}1\\0\\0\\0\end{bmatrix},\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}100\\010\\001\\000\end{bmatrix}$ |
| G0, G6 | $\frac{1}{2}\begin{bmatrix}1\\0\\0\\0\end{bmatrix},\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}0\\1\\0\\1\end{bmatrix},\frac{1}{2}\begin{bmatrix}0\\1\\0\\-1\end{bmatrix},\frac{1}{2}\begin{bmatrix}0\\1\\0\\j\end{bmatrix},\frac{1}{2}\begin{bmatrix}0\\1\\0\\-j\end{bmatrix},$ $\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}10\\00\\00\\01\end{bmatrix},\frac{1}{2}\begin{bmatrix}00\\10\\00\\01\end{bmatrix},\frac{1}{2}\begin{bmatrix}00\\00\\10\\01\end{bmatrix},\frac{1}{2}\begin{bmatrix}100\\010\\001\\000\end{bmatrix}$ |
| G1, G5 | $\frac{1}{2}\begin{bmatrix}1\\0\\0\\0\end{bmatrix},\frac{1}{2}\begin{bmatrix}0\\0\\1\\0\end{bmatrix},\frac{1}{2}\begin{bmatrix}10\\00\\01\\00\end{bmatrix},\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}10\\01\\00\\00\end{bmatrix},\frac{1}{2}\begin{bmatrix}00\\10\\01\\00\end{bmatrix},\frac{1}{2}\begin{bmatrix}10\\01\\00\\00\end{bmatrix},\frac{1}{2}\begin{bmatrix}100\\010\\001\\000\end{bmatrix}$ |
| G1, G6 | $\frac{1}{2}\begin{bmatrix}1\\0\\0\\0\end{bmatrix},\frac{1}{2}\begin{bmatrix}0\\0\\1\\0\end{bmatrix},\frac{1}{2}\begin{bmatrix}10\\00\\01\\00\end{bmatrix},\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}0\\1\\0\\1\end{bmatrix},\frac{1}{2}\begin{bmatrix}0\\1\\0\\-1\end{bmatrix},\frac{1}{2}\begin{bmatrix}0\\1\\0\\j\end{bmatrix},\frac{1}{2}\begin{bmatrix}0\\1\\0\\-j\end{bmatrix},$ $\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}10\\00\\00\\01\end{bmatrix},\frac{1}{2}\begin{bmatrix}00\\10\\00\\01\end{bmatrix},\frac{1}{2}\begin{bmatrix}00\\00\\10\\01\end{bmatrix},\frac{1}{2}\begin{bmatrix}100\\010\\001\\000\end{bmatrix}$ |
| G2, G6 | $\frac{1}{2}\begin{bmatrix}1\\0\\0\\0\end{bmatrix},\frac{1}{2}\begin{bmatrix}0\\1\\0\\0\end{bmatrix},\frac{1}{2}\begin{bmatrix}0\\0\\1\\0\end{bmatrix},\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}100\\010\\001\\000\end{bmatrix},\frac{1}{2}\begin{bmatrix}1\\0\\1\\0\end{bmatrix},\frac{1}{2}\begin{bmatrix}1\\0\\-1\\0\end{bmatrix},\frac{1}{2}\begin{bmatrix}1\\0\\j\\0\end{bmatrix},\frac{1}{2}\begin{bmatrix}1\\0\\-j\\0\end{bmatrix},\frac{1}{2}\begin{bmatrix}0\\1\\0\\1\end{bmatrix},\frac{1}{2}\begin{bmatrix}0\\1\\0\\-1\end{bmatrix},\frac{1}{2}\begin{bmatrix}0\\1\\0\\j\end{bmatrix},\frac{1}{2}\begin{bmatrix}0\\1\\0\\-j\end{bmatrix},$ $\frac{1}{2}\begin{bmatrix}10\\01\\00\\00\end{bmatrix},\frac{1}{2}\begin{bmatrix}10\\00\\01\\00\end{bmatrix},\frac{1}{2}\begin{bmatrix}00\\10\\01\\00\end{bmatrix},\frac{1}{2}\begin{bmatrix}10\\00\\00\\01\end{bmatrix},\frac{1}{2}\begin{bmatrix}00\\10\\00\\01\end{bmatrix},\frac{1}{2}\begin{bmatrix}00\\00\\10\\01\end{bmatrix},\frac{1}{2}\begin{bmatrix}100\\010\\001\\000\end{bmatrix}$ |

FIG. 14

| Bit field mapped to index | 4Tx, Partial coherent<br>4Tx, full coherent |
|---|---|
| 0 | G0 |
| 1 | G1 |
| 2 | G2 |
| 3 | G3 |
| 4 | G4 |
| 5 | G5 |
| 6 | G6 |
| 7 | G0, G4 |
| 8 | G0, G5 |
| 9 | G0, G6 |
| 10 | G1, G5 |
| 11 | G1, G6 |
| 12 | G2, G6 |
| 13 | Reserved |
| 14 | Reserved |
| 15 | Reserved |

FIG. 15

## FIG. 16

| # | PA architecture [dBm] | Reported TPMI groups |
|---|---|---|
| #1 | [23 20 20 20] | G0 and G6 |
| #2 | [20 23 20 20] | G0 and G6 w/ switching |
| #3 | [20 20 23 20] | G0 and G6 w/ switching |
| #4 | [20 20 20 23] | G0 and G6 |
| #5 | [23 23 20 20] | G1 and G6 |
| #6 | [23 20 23 20] | G1 and G6 w/ switching |
| #7 | [23 20 20 23] | G1 and G6 w/ switching |
| #8 | [20 23 23 20] | G1 and G6 w/ switching |
| #9 | [20 23 20 23] | G1 and G6 |
| #10 | [20 20 23 23] | G1 and G6 w/ switching |
| #11 | [23 23 23 20] | G2 and G6 |
| #12 | [23 20 23 23] | G2 and G6 w/ switching |
| #13 | [20 23 23 23] | G2 and G6 w/ switching |
| #14 | [23 23 20 23] | G2 and G6 |
| #15 | [23 17 17 17] | G0 |
| #16 | [17 23 17 17] | G0 w/ switching |
| #17 | [17 17 23 17] | G0 w/ switching |
| #18 | [17 17 17 23] | G0 |
| #19 | [23 23 17 17] | G1 |
| #20 | [23 17 23 17] | G1 w/ switching |
| #21 | [23 17 17 23] | G1 w/ switching |
| #22 | [17 23 23 17] | G1 w/ switching |
| #23 | [17 23 17 23] | G1 |
| #24 | [17 17 23 23] | G1 w/ switching |
| #25 | [23 23 23 17] | G2 |
| #26 | [23 23 17 23] | G2 w/ switching |
| #27 | [23 17 23 23] | G2 w/ switching |
| #28 | [17 23 23 23] | G2 |
| #29 | [23 17 20 20] | G0 and G5 |
| #30 | [23 20 17 20] | G0 and G5 w/ switching |
| #31 | [23 20 20 17] | G0 and G5 w/ switching |
| #32 | [17 23 20 20] | G0 and G5 w/ switching |
| #33 | [17 20 23 20] | G0 and G5 w/ switching |
| #34 | [17 20 20 23] | G0 and G5 |
| #35 | [20 23 17 20] | G0 and G5 w/ switching |
| #36 | [20 20 23 17] | G0 and G5 w/ switching |
| #37 | [20 17 20 23] | G0 and G5 w/ switching |
| #38 | [20 23 20 17] | G0 and G5 w/ switching |
| #39 | [20 17 23 20] | G0 and G5 w/ switching |
| #40 | [20 20 17 23] | G0 and G5 w/ switching |

| # | PA architecture [dBm] | Reported TPMI groups |
|---|---|---|
| #41 | [23 17 20 17] | G0 and G4 |
| #42 | [23 20 17 17] | G0 and G4 w/ switching |
| #43 | [23 17 17 20] | G0 and G4 w/ switching |
| #44 | [20 23 17 17] | G0 and G4 w/ switching |
| #45 | [20 17 23 17] | G0 and G4 w/ switching |
| #46 | [20 17 17 23] | G0 and G4 w/ switching |
| #47 | [17 23 20 17] | G0 and G4 w/ switching |
| #48 | [17 20 23 17] | G0 and G4 w/ switching |
| #49 | [17 20 17 23] | G0 and G4 |
| #50 | [17 17 20 23] | G0 and G4 w/ switching |
| #51 | [17 17 23 20] | G0 and G4 w/ switching |
| #52 | [17 23 17 20] | G0 and G4 w/ switching |
| #53 | [23 23 17 20] | G1 and G5 |
| #54 | [23 23 20 17] | G1 and G5 w/ switching |
| #55 | [23 20 17 23] | G1 and G5 w/ switching |
| #56 | [23 17 20 23] | G1 and G5 w/ switching |
| #57 | [23 20 23 17] | G1 and G5 w/ switching |
| #58 | [23 17 23 20] | G1 and G5 w/ switching |
| #59 | [17 23 23 20] | G1 and G5 w/ switching |
| #60 | [17 20 23 23] | G1 and G5 w/ switching |
| #61 | [17 23 20 23] | G1 and G5 |
| #62 | [20 23 23 17] | G1 and G5 w/ switching |
| #63 | [20 17 23 23] | G1 and G5 w/ switching |
| #64 | [20 23 17 23] | G1 and G5 w/ switching |
| #65 | [20 20 20 20] | G6 |
| #66 | [20 20 20 17] | G5 |
| #67 | [20 20 17 20] | G5 w/ switching |
| #68 | [20 17 20 20] | G5 w/ switching |
| #69 | [17 20 20 20] | G5 |
| #70 | [20 20 17 17] | G4 |
| #71 | [20 17 20 17] | G4 w/ switching |
| #72 | [17 20 20 17] | G4 w/ switching |
| #73 | [17 20 17 20] | G4 |
| #74 | [20 17 17 20] | G4 w/ switching |
| #75 | [17 17 20 20] | G4 w/ switching |
| #76 | [23 23 23 23] | Not needed (This PA architecture is supported by Mode 0) |
| #77 | [20 17 17 17] | Not reported |
| #78 | [17 20 17 17] | Not reported |
| #79 | [17 17 20 17] | Not reported |
| #80 | [17 17 17 20] | Not reported |
| #81 | [17 17 17 17] | Not reported |

| TPMI Groups for full-coherent UE | Precoder enabling full Tx power |
|---|---|
| G0 | $\frac{1}{2}\begin{bmatrix}1\\0\\0\\0\end{bmatrix}$ |
| G1 | $\frac{1}{2}\begin{bmatrix}1\\0\\0\\0\end{bmatrix},\ \frac{1}{2}\begin{bmatrix}0\\0\\1\\0\end{bmatrix},\ \frac{1}{2}\begin{bmatrix}1&0\\0&0\\0&1\\0&0\end{bmatrix}$ |
| G2 | $\frac{1}{2}\begin{bmatrix}1\\0\\0\\0\end{bmatrix},\ \frac{1}{2}\begin{bmatrix}0\\1\\0\\0\end{bmatrix},\ \frac{1}{2}\begin{bmatrix}0\\0\\1\\0\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0&0\\0&1&0\\0&0&1\\0&0&0\end{bmatrix}$ |
| G3 | $\frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0&0\\0&1&0\\0&0&1\\0&0&0\end{bmatrix}$ |
| G4 | $\frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}1&0\\0&0\\0&1\\0&0\end{bmatrix}$ |
| G5 | $\frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0&0\\0&1&0\\0&0&1\\0&0&0\end{bmatrix}$ |
| G6 | $\frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}0\\1\\0\\1\end{bmatrix},\ \frac{1}{2}\begin{bmatrix}0\\1\\0\\-1\end{bmatrix},\ \frac{1}{2}\begin{bmatrix}0\\1\\0\\j\end{bmatrix},\ \frac{1}{2}\begin{bmatrix}0\\1\\0\\-j\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&0\\0&1\end{bmatrix},\ \frac{1}{2}\begin{bmatrix}0&0\\1&0\\0&1\\0&0\end{bmatrix},\ \frac{1}{2}\begin{bmatrix}0&0\\1&0\\0&0\\0&1\end{bmatrix},\ \frac{1}{2}\begin{bmatrix}0&0\\0&1\\1&0\\0&1\end{bmatrix},\ \frac{1}{2}\begin{bmatrix}1&0&0\\0&1&0\\0&0&1\\0&0&0\end{bmatrix}$ |
| G7 | $\frac{1}{2}\begin{bmatrix}1\\0\\0\\0\end{bmatrix},\ \frac{1}{2}\begin{bmatrix}1&0\\0&1\\0&0\\0&0\end{bmatrix}$ |
| G8 | $\frac{1}{2}\begin{bmatrix}1&0\\0&1\\0&0\\0&0\end{bmatrix}$ |
| G0, G4 | $\frac{1}{2}\begin{bmatrix}1\\0\\0\\0\end{bmatrix},\ \frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}1&0\\0&0\\0&1\\0&0\end{bmatrix}$ |
| G0, G5 | $\frac{1}{2}\begin{bmatrix}1\\0\\0\\0\end{bmatrix},\ \frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0&0\\0&1&0\\0&0&1\\0&0&0\end{bmatrix}$ |
| G0, G6 | $\frac{1}{2}\begin{bmatrix}1\\0\\0\\0\end{bmatrix},\ \frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}0\\1\\0\\1\end{bmatrix},\ \frac{1}{2}\begin{bmatrix}0\\1\\0\\-1\end{bmatrix},\ \frac{1}{2}\begin{bmatrix}0\\1\\0\\j\end{bmatrix},\ \frac{1}{2}\begin{bmatrix}0\\1\\0\\-j\end{bmatrix},$ $\frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0\\0&0\\0&0\\0&1\end{bmatrix},\ \frac{1}{2}\begin{bmatrix}0&0\\0&1\\1&0\\0&1\end{bmatrix},\ \frac{1}{2}\begin{bmatrix}0&0\\1&0\\0&0\\0&1\end{bmatrix},\ \frac{1}{2}\begin{bmatrix}1&0&0\\0&1&0\\0&0&1\\0&0&0\end{bmatrix}$ |
| G1, G5 | $\frac{1}{2}\begin{bmatrix}1\\0\\0\\0\end{bmatrix},\ \frac{1}{2}\begin{bmatrix}0\\0\\1\\0\end{bmatrix},\ \frac{1}{2}\begin{bmatrix}1&0\\0&1\\0&0\\0&0\end{bmatrix},\ \frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0&0\\0&1&0\\0&0&1\\0&0&0\end{bmatrix}$ |
| G1, G6 | $\frac{1}{2}\begin{bmatrix}1\\0\\0\\0\end{bmatrix},\ \frac{1}{2}\begin{bmatrix}0\\0\\1\\0\end{bmatrix},\ \frac{1}{2}\begin{bmatrix}1&0\\0&1\\0&0\\0&0\end{bmatrix},\ \frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}0\\1\\0\\1\end{bmatrix},\ \frac{1}{2}\begin{bmatrix}0\\1\\0\\-1\end{bmatrix},\ \frac{1}{2}\begin{bmatrix}0\\1\\0\\j\end{bmatrix},\ \frac{1}{2}\begin{bmatrix}0\\1\\0\\-j\end{bmatrix},$ $\frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0\\0&0\\0&0\\0&1\end{bmatrix},\ \frac{1}{2}\begin{bmatrix}0&0\\0&1\\1&0\\0&1\end{bmatrix},\ \frac{1}{2}\begin{bmatrix}0&0\\1&0\\0&0\\0&1\end{bmatrix},\ \frac{1}{2}\begin{bmatrix}1&0&0\\0&1&0\\0&0&1\\0&0&0\end{bmatrix}$ |
| G2, G6 | $\frac{1}{2}\begin{bmatrix}1\\0\\0\\0\end{bmatrix},\ \frac{1}{2}\begin{bmatrix}0\\1\\0\\0\end{bmatrix},\ \frac{1}{2}\begin{bmatrix}0\\0\\1\\0\end{bmatrix},\ \frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0&0\\0&1&0\\0&0&1\\0&0&0\end{bmatrix},\ \frac{1}{2}\begin{bmatrix}1\\0\\1\\0\end{bmatrix},\ \frac{1}{2}\begin{bmatrix}1\\0\\-1\\0\end{bmatrix},\ \frac{1}{2}\begin{bmatrix}1\\0\\j\\0\end{bmatrix},\ \frac{1}{2}\begin{bmatrix}1\\0\\-j\\0\end{bmatrix},\ \frac{1}{2}\begin{bmatrix}0\\1\\0\\1\end{bmatrix},\ \frac{1}{2}\begin{bmatrix}0\\1\\0\\-1\end{bmatrix},\ \frac{1}{2}\begin{bmatrix}0\\1\\0\\j\end{bmatrix},\ \frac{1}{2}\begin{bmatrix}0\\1\\0\\-j\end{bmatrix},$ $\frac{1}{2}\begin{bmatrix}1&0\\0&1\\0&0\\0&0\end{bmatrix},\ \frac{1}{2}\begin{bmatrix}1&0\\0&0\\0&1\\0&0\end{bmatrix},\ \frac{1}{2}\begin{bmatrix}0&0\\1&0\\0&1\\0&0\end{bmatrix},\ \frac{1}{2}\begin{bmatrix}1&0\\0&0\\0&0\\0&1\end{bmatrix},\ \frac{1}{2}\begin{bmatrix}0&0\\0&1\\1&0\\0&1\end{bmatrix},\ \frac{1}{2}\begin{bmatrix}0&0\\1&0\\0&0\\0&1\end{bmatrix},\ \frac{1}{2}\begin{bmatrix}1&0&0\\0&1&0\\0&0&1\\0&0&0\end{bmatrix}$ |

FIG. 17

| Bit field mapped to index | 4Tx, Partial coherent<br>4Tx, full coherent |
|:---:|:---:|
| 0 | G0 |
| 1 | G1 |
| 2 | G2 |
| 3 | G3 |
| 4 | G4 |
| 5 | G5 |
| 6 | G6 |
| 7 | G7 |
| 8 | G8 |
| 9 | G0, G4 |
| 10 | G0, G5 |
| 11 | G0, G6 |
| 12 | G1, G5 |
| 13 | G1, G6 |
| 14 | G2, G6 |
| 15 | Reserved |

FIG. 18

# FIG. 19

EP 4 152 787 A1

| | PA architecture [dBm] | Reported TPMI groups |
|---|---|---|
| #1 | [23 20 20 20] | G0 and G6 |
| #2 | [20 23 20 20] | G0 and G6 w/ switching |
| #3 | [20 20 23 20] | G0 and G6 w/ switching |
| #4 | [20 20 20 23] | G0 and G6 |
| #5 | [23 23 20 20] | G1 and G6 |
| #6 | [23 20 23 20] | G1 and G6 w/ switching |
| #7 | [23 20 20 23] | G1 and G6 w/ switching |
| #8 | [20 23 23 20] | G1 and G6 w/ switching |
| #9 | [20 23 20 23] | G1 and G6 |
| #10 | [20 20 23 23] | G1 and G6 w/ switching |
| #11 | [23 23 23 20] | G2 and G6 |
| #12 | [23 20 23 23] | G2 and G6 w/ switching |
| #13 | [20 23 23 23] | G2 and G6 w/ switching |
| #14 | [23 23 20 23] | G2 and G6 |
| #15 | [23 17 17 17] | G0 |
| #16 | [17 23 17 17] | G0 w/ switching |
| #17 | [17 17 23 17] | G0 w/ switching |
| #18 | [17 17 17 23] | G0 |
| #19 | [23 23 17 17] | G1 |
| #20 | [23 17 23 17] | G7 |
| #21 | [23 17 17 23] | G7 w/switching |
| #22 | [17 23 23 17] | G7 w/switching |
| #23 | [17 23 17 23] | G1 |
| #24 | [17 17 23 23] | G7 |
| #25 | [23 23 23 17] | G2 |
| #26 | [23 23 17 23] | G2 w/ switching |
| #27 | [23 17 23 23] | G2 w/ switching |
| #28 | [17 23 23 23] | G2 |
| #29 | [23 17 20 20] | G0 and G5 |
| #30 | [23 20 17 20] | G0 and G5 w/ switching |
| #31 | [23 20 20 17] | G0 and G5 w/ switching |
| #32 | [17 23 20 20] | G0 and G5 w/ switching |
| #33 | [17 20 23 20] | G0 and G5 w/ switching |
| #34 | [17 20 20 23] | G0 and G5 |
| #35 | [20 23 17 20] | G0 and G5 w/ switching |
| #36 | [20 20 23 17] | G0 and G5 w/ switching |
| #37 | [20 17 20 23] | G0 and G5 w/ switching |
| #38 | [20 23 20 17] | G0 and G5 w/ switching |
| #39 | [20 17 23 20] | G0 and G5 w/ switching |
| #40 | [20 20 17 23] | G0 and G5 w/ switching |

| | PA architecture [dBm] | Reported TPMI groups |
|---|---|---|
| #41 | [23 17 20 17] | G0 and G4 |
| #42 | [23 20 17 17] | G7 |
| #43 | [23 17 17 20] | G7 w/ switching |
| #44 | [20 23 17 17] | G7 w/ switching |
| #45 | [20 17 23 17] | G0 and G4 w/ switching |
| #46 | [20 17 17 23] | G7 w/ switching |
| #47 | [17 23 20 17] | G7 w/ switching |
| #48 | [17 20 23 17] | G7 w/ switching |
| #49 | [17 20 17 23] | G0 and G4 |
| #50 | [17 17 20 23] | G7 |
| #51 | [17 17 23 20] | G7 w/ switching |
| #52 | [17 23 17 20] | G0 and G4 w/ switching |
| #53 | [23 23 17 20] | G1 and G5 |
| #54 | [23 23 20 17] | G1 and G5 w/ switching |
| #55 | [23 20 17 23] | G1 and G5 w/ switching |
| #56 | [23 17 20 23] | G1 and G5 w/ switching |
| #57 | [23 20 23 17] | G1 and G5 w/ switching |
| #58 | [23 17 23 20] | G1 and G5 w/ switching |
| #59 | [17 23 23 20] | G1 and G5 w/ switching |
| #60 | [17 20 23 23] | G1 and G5 w/ switching |
| #61 | [17 23 20 23] | G1 and G5 |
| #62 | [20 23 23 17] | G1 and G5 w/ switching |
| #63 | [20 17 23 23] | G1 and G5 w/ switching |
| #64 | [20 23 17 23] | G1 and G5 w/ switching |
| #65 | [20 20 20 20] | G6 |
| #66 | [20 20 20 17] | G5 |
| #67 | [20 20 17 20] | G5 w/ switching |
| #68 | [20 17 20 20] | G5 w/ switching |
| #69 | [17 20 20 20] | G5 |
| #70 | [20 20 17 17] | G4 |
| #71 | [20 17 20 17] | G8 |
| #72 | [17 20 20 17] | G8 w/ switching |
| #73 | [17 20 17 20] | G4 |
| #74 | [20 17 17 20] | G8 w/ switching |
| #75 | [17 17 20 20] | G8 |
| #76 | [23 23 23 23] | Not needed (This PA architecture is supported by Mode 0) |
| #77 | [20 17 17 17] | |
| #78 | [17 20 17 17] | |
| #79 | [17 17 20 17] | Not reported |
| #80 | [17 17 17 20] | |
| #81 | [17 17 17 17] | |

| TPMI Groups for full-coherent UE | Precoder enabling full Tx power |
|---|---|
| G0 | $\frac{1}{2}\begin{bmatrix}1\\0\\0\\0\end{bmatrix}$ |
| G1 | $\frac{1}{2}\begin{bmatrix}1\\0\\0\\0\end{bmatrix}, \frac{1}{2}\begin{bmatrix}0\\0\\1\\0\end{bmatrix}, \frac{1}{2}\begin{bmatrix}1&0\\0&0\\0&1\\0&0\end{bmatrix}$ |
| G2 | $\frac{1}{2}\begin{bmatrix}1\\0\\0\\0\end{bmatrix}, \frac{1}{2}\begin{bmatrix}0\\1\\0\\0\end{bmatrix}, \frac{1}{2}\begin{bmatrix}0\\0\\1\\0\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}$ |
| G3 | $\frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}$ |
| G4 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&0\\0&1\\0&0\end{bmatrix}$ |
| G5 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0&0\\0&1&0\\0&0&1\\0&0&0\end{bmatrix}$ |
| G6 | $\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}, \frac{1}{2}\begin{bmatrix}0\\1\\0\\1\end{bmatrix}, \frac{1}{2}\begin{bmatrix}0\\1\\0\\-1\end{bmatrix}, \frac{1}{2}\begin{bmatrix}0\\1\\0\\j\end{bmatrix}, \frac{1}{2}\begin{bmatrix}0\\1\\0\\-j\end{bmatrix}, \frac{1}{2}\begin{bmatrix}1&0\\0&1\\0&0\\0&0\end{bmatrix}, \frac{1}{2}\begin{bmatrix}1&0\\0&0\\0&1\\0&0\end{bmatrix}, \frac{1}{2}\begin{bmatrix}0&0\\1&0\\0&1\\0&0\end{bmatrix}, \frac{1}{2}\begin{bmatrix}1&0\\0&0\\0&0\\0&1\end{bmatrix}, \frac{1}{2}\begin{bmatrix}0&0\\1&0\\0&0\\0&1\end{bmatrix}, \frac{1}{2}\begin{bmatrix}0&0\\0&0\\1&0\\0&1\end{bmatrix}, \frac{1}{2}\begin{bmatrix}1&0&0\\0&1&0\\0&0&1\\0&0&0\end{bmatrix}$ |
| G10 | (Only non-antenna selection (i.e. full-coherent) TPMIs achieve UL full power: e.g. $\frac{1}{2}\begin{bmatrix}1\\-1\\1\\1\end{bmatrix}$) |

FIG. 20

| Bit field mapped to index | 4Tx, Partial coherent 4Tx, full coherent |
|---|---|
| 0 | G0 |
| 1 | G1 |
| 2 | G2 |
| 3 | G3 |
| 4 | G4 |
| 5 | G5 |
| 6 | G6 |
| 7 | G10 |
| 8 | Reserved |
| 9 | Reserved |
| 10 | Reserved |
| 11 | Reserved |
| 12 | Reserved |
| 13 | Reserved |
| 14 | Reserved |
| 15 | Reserved |

FIG. 21

FIG. 22

FIG. 23

FIG. 24

10, 20

```
        1001                1007              1004
   ┌──────────────┐           ●         ┌──────────────┐
   │              │           │         │ COMMUNICATION│
   │  PROCESSOR   │───────────┤         │  APPARATUS   │
   │              │           │         │              │
   └──────────────┘           │         └──────────────┘
                              │
        1002                  │           1005
   ┌──────────────┐           │         ┌──────────────┐
   │              │           ●         │    INPUT     │
   │   MEMORY     │───────────┤         │  APPARATUS   │
   │              │           │         │              │
   └──────────────┘           │         └──────────────┘
                              │
        1003                  │           1006
   ┌──────────────┐           ●         ┌──────────────┐
   │              │           │         │   OUTPUT     │
   │   STORAGE    │───────────┘         │  APPARATUS   │
   │              │                     │              │
   └──────────────┘                     └──────────────┘
```

FIG. 25

**INTERNATIONAL SEARCH REPORT**

| International application No. |
|---|
| PCT/JP2020/019304 |

A. CLASSIFICATION OF SUBJECT MATTER
Int. Cl. H04W8/22(2009.01)i
FI: H04W8/22

According to International Patent Classification (IPC) or to both national classification and IPC

B. FIELDS SEARCHED

Minimum documentation searched (classification system followed by classification symbols)
Int. Cl. H04W8/22

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | ZTE, Maintenance of full power UL transmission [online], 3GPP TSG RAN WG1 #100b_e R1-2001598, 11 April 2020, entire text, all drawings | 1-6 |
| A | CMCC, Discussion on full TX Power UL transmission [online], 3GPP TSG RAN WG1 #100b_e R1-2002214, 11 April 2020, entire text, all drawing | 1-6 |
| A | Qualcomm Incorporated, Remaining issues on full power UL transmissions [online], 3GPP TSG RAN WG1 #100b_e R1-2002553, 11 April 2020, entire text, all drawings | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24.11.2020 | 01.12.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010